# FASCICULE DE BREVET EUROPEEN

(11) **EP 2 571 753 B1**
(45) Date de publication et mention de la délivrance du brevet: **08.01.2014**
(21) Numéro de dépôt: 11726880.5
(22) Date de dépôt: 18.05.2011
(51) Int. Cl.: B63B 21/50, E21B 17/01

(54) **INSTALLATION DE LIAISON FOND-SURFACE COMPRENANT UNE STRUCTURE DE GUIDAGE DE CONDUITE FLEXIBLE**
VORRICHTUNG FÜR EINE VERBINDUNG ZWISCHEN MEERESGRUND UND OBERFLÄCHE MIT EINER FLEXIBLEN ROHRFÜHRUNGSSTRUKTUR
SEABED-TO-SURFACE LINKING EQUIPMENT INCLUDING A FLEXIBLE PIPE GUIDING STRUCTURE

(30) Priorité: 20.05.2010 FR 1053909
(43) Date de publication de la demande: 27.03.2013
(73) Titulaire: SAIPEM S.A, 78180 Montigny le Bretonneux (FR)
(72) Inventeur: PIONETTI, François-Régis, F-50450 La Baleine (FR); SZYSZKA, Damien, F-92130 Issy Les Moulineaux (FR); CHKIR, Rami, F-92800 Puteaux (FR)
(74) Mandataire: Domange, Maxime
(86) Numéro de dépôt international: PCT/FR2011/051118
(87) Numéro de publication internationale: WO 2011/144864

(56) Documents cités:
- WO-A1-2009/150142
- WO-A2-2009/122098
- US-A- 4 470 722

## Description

La présente invention concerne une installation de liaison fond-surface entre une pluralité de conduites sous-marine reposant au fond de la mer et un support flottant en surface, comprenant une tour hybride constituée d'une pluralité de conduites flexibles reliées à des conduites rigides montantes, ou risers verticaux, l'extrémité supérieure desdites conduites flexibles étant solidaire d'un touret pivotant librement à l'avant du navire ou au sein du navire, en général dans le tiers avant dudit navire.

Le secteur technique de l'invention est plus particulièrement le domaine de la fabrication et de l'installation de colonnes montantes (« riser ») de production pour l'extraction sous-marine de pétrole, de gaz ou autre matériau soluble ou fusible ou d'une suspension de matière minérale à partir de tête de puits immergé jusqu'à un support flottant, pour le développement de champs de production installés en pleine mer au large des côtes. L'application principale et immédiate de l'invention étant dans le domaine de la production pétrolière.

Le support flottant comporte en général des moyens d'ancrage pour rester en position malgré les effets des courants, des vents et de la houle. Il comporte aussi en général des moyens de stockage et de traitement du pétrole ainsi que des moyens de déchargement vers des pétroliers enleveurs, ces derniers se présentant à intervalle régulier pour effectuer l'enlèvement de la production. L'appellation courante de ces supports flottants est le terme anglo-saxon "Floating Production Storage Offloading" (signifiant "moyen flottant de stockage, de production et de déchargement") dont on utilise le terme abrégé "FPSO" dans l'ensemble de la description suivante.

Les supports flottants sont :
- soit du type à cap fixe, c'est-à-dire qu'ils possèdent une pluralité d'ancres, en général situées à chacun des angles dudit support flottant maintenant ce dernier dans un cap fixe et n'autorisant alors que le roulis le tangage et limitant les embardées et le lacet ;
- soit du type à touret, c'est-à-dire que toutes les ancres convergent vers une structure cylindrique solidaire du navire, mais libre en rotation selon l'axe vertical ZZ, le support flottant étant alors libre de tourner autour dudit touret et se positionner dans la direction de moindre effort de la résultante des effets du vent, du courant et de la houle sur le support flottant et ses superstructures.

Les supports flottants de type à cap fixe sont plus particulièrement destinés à des environnements pas trop agités et présentant des houles d'ampleur moyennes en provenance d'une seule direction, telles que rencontrées en Afrique de l'ouest. On installe alors le support flottant face à cette direction privilégiée de la houle pour en minimiser les effets. Ce type de support flottant présente l'avantage de pouvoir d'installer simplement un très grand nombre de liaisons fond-surface sur un bordé dudit support flottant, voire sur les deux bordés bâbord et tribord.

Lorsque les conditions sont plus sévères, voire extrêmes comme en Mer du Nord, on a proposé dans WO 2009/150142 un support flottant du type à cap fixe, à savoir une plateforme du type SPAR equipée d'une structure inférieure déconnectable à laquelle sont reliées les extrémités supérieures de conduites flexibles assurant des liaisons fond-surface. Mais, pour ces conditions extrêmes, un support flottant avantageux est alors du type à touret dans lequel toutes les liaisons fond-surface doivent converger vers un touret avant de rejoindre le FPSO proprement dit, par l'intermédiaire d'un raccord à joint tournant situé à l'axe dudit touret. En général les conduites de liaisons fond-surface sont réalisées par des conduites flexibles reliant directement les conduites reposant sur le fond de la mer au touret, lesdites conduites flexibles étant en général organisées radialement ou en étoile uniformément réparties tout autour de l'axe dudit touret.

De nombreuses configurations ont été développées et l'on connaît le brevet WO-2009-122098 de la demanderesse qui décrit un FPSO équipé d'un tel touret et de conduites flexibles associées, plus particulièrement destiné aux conditions extrêmes rencontrées en arctique. Une telle configuration est intéressante pour les profondeurs d'eau moyenne, c'est-à-dire de 100 à 350m, voire 500-600m. En particulier, la mise en oeuvre de conduites flexibles sur toute la hauteur de tranche d'eau entre les conduites rigides reposant au fond de la mer et le support flottant autorise des déplacements du support flottant plus importants que lorsque l'on met en oeuvre des conduites rigides. Toutefois, il n'est pas possible dans ce type de liaison fond-surface entre le touret d'un support flottant et des conduites reposant au fond de la mer, de mettre en oeuvre lesdites conduites flexibles sous forme de chaînette plongeante, c'est-à-dire avec un point bas d'inflexion comme décrit dans les liaisons fond-surface de type tour hybride comprenant :
- un riser vertical dont l'extrémité inférieure est ancrée au fond de la mer par le biais d'une articulation flexible, et relié à une dite conduite reposant au fond de la mer, et l'extrémité supérieure est tendue par un flotteur immergé en subsurface auquel elle est reliée, et
- une conduite de liaison flexible, entre l'extrémité supérieure dudit riser et un support flottant en surface, ladite conduite de liaison flexible prenant, le cas échéant, de par son propre poids la forme d'une courbe en chaînette plongeante, c'est-à-dire descendant largement en dessous du flotteur pour remonter ensuite jusqu'audit support flottant, laquelle chaînette plongeante autorise des déplacements importants du support flottant absorbés par les déformations de la conduite flexible, notamment la montée ou la descente dudit point bas d'inflexion de la chaînette plongeante.

Mais, dès que la profondeur d'eau atteint 1000-1500m, voire 2000-3000m, le coût de cette multiplicité de conduites flexibles devient très élevé en raison de la longueur développée de chacune desdites conduites flexibles, car ces conduites flexibles sont très complexes et très délicates à fabriquer pour atteindre des niveaux de sûreté de fonctionnement requis pour rester en opération sur des durées pouvant atteindre et dépasser 20-25 ans, voire plus.

En particulier, les conduites flexibles risquent d'interférer entre elles et s'entrechoquer.

Le but de la présente invention est de fournir un nouveau mode d'installation de liaison fond-surface d'un support flottant équipé d'un touret sur lequel des conduites flexibles sont fixées et arrimées pour assurer au moins en partie la liaison du support flottant avec des conduites reposant au fond de la mer.

Plus précisément, le but de la présente invention est de fournir un nouveau type de liaison fond-surface qui soit à la fois moins encombrant, plus fiable mécaniquement en termes de tenue dans le temps tout en étant moins coûteux et plus simple à réaliser.

Pour ce faire, la présente invention fournit une installation de liaison fond-surface entre une pluralité de conduites sous-marines reposant au fond de la mer et un support flottant en surface et ancré au fond de la mer, comprenant :
a) un dit support flottant comprenant un touret comprenant une cavité au sein d'une structure déportée à l'avant du support flottant ou intégrée dans ou dessous la coque du support flottant, de préférence ladite cavité traversant la coque du support flottant sur toute sa hauteur, ledit touret comprenant en outre une partie interne cylindrique apte à rester sensiblement fixe par rapport au fond de la mer à l'intérieur de ladite cavité lorsque ledit support flottant est entraîné en rotation autour de l'axe vertical ZZ' de ladite partie interne ou dite cavité du touret, ledit support flottant étant ancré au fond de la mer par des lignes fixées à leurs extrémités supérieures à ladite partie interne cylindrique du touret, et
b) une pluralité de conduites flexibles s'étendant depuis ledit touret auquel leurs extrémités supérieures sont reliées, jusqu'aux extrémités supérieures d'une respectivement pluralité de conduites rigides auxquelles les extrémités inférieures desdites conduites flexibles sont reliées, lesdites conduites rigides assurant la liaison entre lesdites conduites flexibles et respectivement ladite pluralité de conduites sous-marines reposant au fond de la mer, lesdites conduites rigides étant réunies entre elles et/ou guidées au moins à leurs sommets par une structure porteuse tensionnée par des éléments de flottabilité, ladite structure porteuse étant reliée à une embase reposant ou enfoncée au fond de la mer, de préférence par l'intermédiaire d'une articulation mécanique flexible, et ladite structure porteuse comprenant de préférence un tendon vertical s'étendant jusqu'à ladite articulation mécanique flexible,
ladite installation étant caractérisée en ce qu'elle comprend une structure de guidage maintenue en subsurface H entre ledit touret et ladite structure porteuse, de préférence solidaire de ladite structure porteuse au sommet desdites conduites rigides, ladite structure de guidage étant apte à guider lesdites conduites flexibles entre d'une part, leurs extrémités supérieures reliée à ladite partie interne cylindrique du touret et d'autre part, leurs extrémités inférieures reliées aux extrémités supérieures desdites conduites rigides, de préférence par l'intermédiaire de dispositifs en col de cygne, ladite structure de guidage comprenant une pluralité de premiers éléments de guidage traversés respectivement par ladite pluralité de conduites flexibles, de telle sorte qu'une dite conduite flexible comprend au moins une première portion de conduite flexible en configuration de chaînette plongeante, comprenant un point bas d'inflexion intermédiaire entre d'une part l'extrémité inférieure de ladite conduite flexible reliée à l'extrémité supérieure d'une dite conduite rigide, et d'autre part, le point de contact de ladite conduite flexible au niveau dudit premier élément de guidage qu'elle traverse, et une deuxième portion de conduite flexible s'étendant entièrement au-dessus dudit point de contact de la conduite flexible avec ledit premier élément de guidage, selon une courbure en forme de chaînette depuis ledit élément de guidage qu'elle traverse jusqu'au dudit touret auquel son extrémité supérieure est reliée.

La structure de guidage selon l'invention permet de créer une pluralité de chaînettes plongeantes s'étendant (en ce qui concerne le centre de la conduite) dans des plans sensiblement verticaux passant par l'axe vertical Z₁Z₁' de ladite structure de guidage et de préférence, le cas échéant, dans le même plan que celui desdits dispositifs de type col de cygne d'une part, et d'autre part, d'espacer lesdites chaînettes plongeantes les unes des autres dans un plan perpendiculaire horizontal de manière à créer un dièdre d'un angle donné minimal entre deux plans sensiblement verticaux adjacents dans lesquels s'étendent les axes desdites chaînettes plongeantes.

Lesdites chaînettes plongeantes desdites premières portions de conduite flexible constituent une réserve de flexibilité autorisant des déformations contrôlées, tolérables desdites conduites flexibles lorsque celles-ci sont déformées de par les mouvements du support flottant. D'autre part, la structure de guidage permet de garantir que la courbure desdites chaînettes plongeantes au niveau de leur point bas d'inflexion reste toujours avec un rayon de courbure supérieur à un rayon de courbure minimal en deçà duquel la déformation de la conduite flexible deviendrait irréversible et/ou l'endommagerait.

Cet effet technique avantageux de ladite structure de guidage est très important dans le cas de la mise en oeuvre de conduites flexibles, car le point de fragilité de celles-ci qui commande la durée de tenue dans le temps de l'installation et se situe essentiellement dans la zone des dits points bas desdites chaînettes plongeantes où le rayon de courbure est minimal.

Au total, la structure de guidage selon l'invention permet de mettre en oeuvre avec un encombrement réduit optimal, un plus grand nombre de conduites flexibles sans que celles-ci n'interfèrent les unes avec les autres et notamment ne s'entrechoquent, en cas de mouvement dudit support flottant lié à la houle, au courant et/ou aux vagues.

On comprend que l'axe vertical ZZ' de ladite structure interne cylindrique du touret et celui de ladite cavité du touret coïncidant.

D'autre part, de manière connue, ladite structure interne cylindrique du touret est articulée en rotation relative à l'intérieur de ladite cavité par rapport à ladite structure déportée à l'avant du support et/ou par rapport à la coque de dit support flottant par l'intermédiaire d'au moins un palier de roulement ou de frottement situé au-dessus de la ligne de flottaison et/ou hors d'eau, de préférence un palier de roulement, de manière à autoriser la rotation dudit support flottant autour dudit axe sensiblement vertical ZZ' du touret, sans entraîner la rotation de ladite structure interne cylindrique du touret.

De façon connue, ladite structure interne cylindrique du touret est une structure tubulaire étanche, comportant une paroi de fond assemblée de manière étanche à l'extrémité inférieure de la paroi tubulaire latérale de ladite structure interne cylindrique du touret et des secondes conduites assurent la liaison entre l'extrémité supérieure desdites conduites flexibles, au niveau de ladite paroi de fond de la structure interne pivotante du touret et le pont du support flottant, en remontant au sein de ladite structure interne du touret et de ladite cavité, jusqu'à un raccord de type raccord à joint tournant solidaire dudit support flottant.

La configuration dite en « chaînette plongeante » de ladite première portion de conduite flexible est bien connue de l'homme de l'art et décrite dans les demandes de brevets antérieures au nom de la demanderesse. Elle est constituée de deux courbes en chaînettes de courbure similaire et disposées symétriquement par rapport à un axe vertical Z₀Z₀' et à un plan vertical P₀ de symétrie passant au dit point bas.

On comprend que lesdites deuxièmes portions de conduites flexibles s'éloignent de plus en plus de l'axe vertical du touret et de celui de ladite structure de guidage qui se trouve en alignement de l'axe du touret lorsque l'installation est au repos, depuis leur extrémité supérieure reliée au dit touret jusque vers ledit élément de guidage à travers lequel elle passe, tandis que, au contraire, lesdites premières portions de conduites flexibles se rapprochent de plus en plus de l'axe de ladite structure porteuse et des extrémités supérieures desdites conduites rigides, depuis ledit élément de guidage jusqu'aux dites extrémités supérieures desdites conduites rigides auxquelles elles sont reliées.

Plus particulièrement, ladite structure de guidage comporte de préférence au moins 4, de préférence encore 6 à 12 dits premiers éléments de guidage répartis, de préférence symétriquement et régulièrement, de préférence encore circulairement, en périphérie de ladite structure de guidage, et dont les axes Z₃Z₃' sont situés à une distance R1 d'au moins 3m, de préférence de 3 à 25 m, de l'axe Z₁Z₁' de ladite structure de guidage.

On comprend que l'axe Z₁Z₁' de la structure de guidage et celui de la structure porteuse sont sensiblement alignés entre eux et avec l'axe ZZ' du touret lorsque l'installation est au repos.

Selon une autre caractéristique avantageuse, ladite structure de guidage comporte au moins un élément de flottabilité apte à maintenir ladite structure de guidage au-dessus de ladite structure porteuse des conduites rigides, à une profondeur H d'au moins 25 m, de préférence de 50 à 250 m de la surface.

On comprend que ledit élément de flottabilité exerce une tension verticale, donc sensiblement dans l'axe de ladite structure de guidage lorsque l'installation est au repos

Ledit élément de flottabilité de la structure de guidage est particulièrement avantageux en ce qu'il permet de contribuer au fonctionnement de ladite structure porteuse et au tensionnement, donc au raidissement de sa liaison avec l'embase au fond de la mer, mais également en ce qu'il facilite la pose de ladite structure de guidage et sa connexion avec ladite structure porteuse et conduite rigide lors du procédé de pose de l'installation.

Plus particulièrement encore, ledit élément de flottabilité est constitué par au moins un bidon dont on peut faire varier la force de tensionnement par ballastage ou déballastage dudit bidon.

On comprend qu'en jouant sur la flottabilité dudit bidon, que l'on déballaste par des moyens connus, on pourra augmenter (déballastage) ou réduire (ballastage) le tensionnement de ladite structure porteuse et la raideur de sa liaison avec l'embase au fond de la mer.

Avantageusement, ladite structure de guidage est reliée à ladite structure porteuse par un lien constituant une articulation mécanique souple entre ladite structure de guidage et ladite structure porteuse.

Avantageusement encore ladite structure de guidage comporte au moins un premier étage P₁ de dits premiers éléments de guidage situés à une profondeur H1 et au moins un deuxième étage P₂ de deuxièmes éléments de guidage situés au-dessus desdits premiers éléments de guidage à une profondeur H2 inférieure à la profondeur H1 desdits premiers éléments de guidage et à travers lesquels passent lesdites deuxièmes portions de conduites flexibles, l'axe Z₄Z₄' de chaque dit deuxième élément de guidage étant positionné sensiblement dans un même plan vertical, mais à une distance R2 plus proche de l'axe Z₁Z'₁ de ladite structure de guidage que celui Z₃Z₃' dudit premier élément de guidage au-dessus duquel ledit deuxième élément de guidage est situé et à travers lequel passe une même conduite flexible.

Cette configuration à au moins 2 étages de répartition desdits premiers et deuxièmes éléments de guidage présente l'avantage d'améliorer considérablement le guidage desdites conduites flexibles en évitant notamment les risques d'endommagement des conduites flexibles par coincement de la conduite flexible, créant des courbures excessives et/ou une compression axiale de celles-ci au niveau d'un dit premier ou deuxième élément de guidage et surtout au niveau desdits premiers éléments de guidage, phénomène redouté et dangereux surtout en cas de tempête et/ou de conditions océano-météorologiques sévères.

Ainsi, cette caractéristique vise à prémunir l'intégrité des conduites flexibles, notamment en pression et d'éviter leur éclatement et donc la ruine de l'installation et les pollutions considérables qui pourraient en résulter.

Selon un mode préféré de réalisation de l'invention que ladite structure de guidage est reliée au dit touret par au moins un câble de liaison et de tensionnement.

On entend ici par « câble de tensionnement », un câble sous tension dont la tension s'exerce sensiblement dans l'axe de la structure de guidage en l'absence d'autre contrainte. Il peut s'agir aussi d'une pluralité de câbles ou d'un câble combiné à une pluralité d'élingues, de préférence 3 élingues disposés en patte d'oie, dont les points de fixation sont disposés uniformément autour de l'axe de la structure de guidage, et dont le point de suspension de ladite patte d'oie est relié à l'extrémité inférieure dudit câble de tensionnement, de manière à ce que la tension résultante du ou des câbles ou élingues s'exerce sensiblement dans l'axe de la structure de guidage en l'absence d'autre contrainte.

La mise en oeuvre de ce câble de tensionnement vise à minimiser les déformations des chaînettes plongeantes des conduites flexibles en entraînant l'extrémité supérieure de la tour constituée par l'ensemble de ladite structure porteuse et desdites conduites rigides lors des déplacements extrêmes du support flottant sous l'effet de la houle, du vent et du courant, forçant ainsi ladite tour à s'incliner de manière sensiblement proportionnelle au déplacement dudit support flottant en translation horizontale par rapport à la verticale passante par ladite embase.

La limitation des déformations des chaînettes plongeantes permet de réduire les différences de hauteur entre les différents points bas d'inflexion de celles-ci en cas de mouvements du support flottant.

Dans un autre mode de réalisation, la structure de guidage est encastrée au sommet de la tour et se trouve donc en continuité du sommet de la tour.

Plus particulièrement ledit câble de tensionnement est tensionné de manière à ce que l'angle α entre l'axe Z₂Z₂' dudit câble de tensionnement et l'axe Z₁Z₁' de ladite structure porteuse, et de préférence ledit tendon, reste inférieur à 5°, ledit support flottant étant ancré au fond de la mer de telle manière que l'angle ß d'inclinaison entre l'axe Z₁Z'₁ de ladite structure porteuse et de préférence dudit tendon vertical et la verticale Z₀Z₀' passant par ladite embase, reste inférieur à 10° lorsque le support flottant est mouvementé de par l'agitation de la mer et/ou la force du vent en dépit de son ancrage.

Dans une variante de réalisation ledit câble de tensionnement traverse ledit touret, de préférence sensiblement à l'axe ZZ' dudit touret, puis est tourné sur des poulies solidaires dudit touret et/ou de la structure du support flottant, de préférence du pont de support flottant, avant d'être tensionné à son extrémité libre par un contrepoids se déplaçant parallèlement à l'axe ZZ' dudit touret dans un puits de guidage à l'intérieur dudit touret ou respectivement à l'intérieur de la coque dudit support flottant.

Dans ce mode de réalisation, il suffit de modifier le poids dudit contrepoids pour modifier ledit tensionnement, qui est relativement simple et requiert un minimum d'entretien.

Dans une autre variante de réalisation que ledit câble est tensionné à l'aide d'un tensionneur hydraulique solidaire du touret ou du pont du support flottant, ledit tensionneur hydraulique comportant au moins un vérin hydraulique coopérant avec un moufflage de poulie, l'extrémité dudit câble de tensionnement étant liée à un point fixe solidaire du support dudit vérin hydraulique, et un groupe hydraulique constitué d'accumulateurs et de pompes étant aptes à maintenir une pression donnée sensiblement constante dans ledit vérin permettant de fournir une tension donnée sensiblement constante dans ledit câble de tensionnement.

Ce mode de réalisation du tensionnement du câble de tensionnement est plus complexe que l'utilisation d'un contrepoids, mais présente l'avantage de pouvoir ajuster le tensionnement en temps réel en changeant simplement la consigne de pression au sein des accumulateurs, ce qui peut être fait avec une plus grande rapidité dans le cas de conditions océano-météorologiques sévères et nécessitant le cas échéant un ajustement fin du tensionnement dudit câble de tensionnement pour limiter au minimum les contraintes infligées aux conduites flexibles.

De préférence encore, ledit câble de tensionnement coopère avec un émerillon sur le parcours du câble, de préférence à l'intérieur du touret, de telle manière que la partie inférieure du câble dessous ledit émerillon reste sans torsion lorsque la partie supérieure dudit câble de tensionnement suit les mouvements en rotation relative dudit support flottant par rapport à ladite partie cylindrique interne du touret.

Selon une autre caractéristique particulière, l'installation comprend une structure d'amarrage fixée, de préférence de manière réversible, en sous-face de la paroi de fond, ladite partie cylindrique interne du touret, lesdites conduites flexibles étant amarrées à ladite structure d'amarrage au niveau de leurs dites extrémités supérieures et ledit support flottant étant ancré au fond de la mer par l'intermédiaire de lignes d'ancrage amarrées à ladite structure d'amarrage, de préférence une pluralité de secondes conduites de liaison s'étendant à travers ledit touret entre les extrémités supérieures desdites conduites flexibles et le pont du support flottant traversant la paroi de fond de la partie cylindrique interne du touret et remontant jusqu'à un raccord, de préférence de type à joint tournant, auquel sont raccordées lesdites secondes conduites de liaison, ledit raccord étant solidaire du support flottant, de préférence au niveau du pont du support flottant.

Ladite structure d'amarrage peut être connectée et/ou déconnectée rapidement du touret, ladite structure d'amarrage présente de préférence des éléments de flottabilité de manière à pouvoir rester en subsurface lorsque ladite structure d'amarrage est déconnectée du touret, ce qui est avantageux de réaliser en cas de forte tempête et que les mouvements du support flottant seraient trop importants en dépit de la mise en oeuvre de l'installation selon l'invention telle que décrite ci-dessus.

Dans une mode particulier de réalisation, l'installation comporte une tour hybride multi-risers comprenant :
a) un tendon vertical suspendu à au moins un flotteur immergé en subsurface, de préférence par l'intermédiaire d'une chaîne ou câble, ledit tendon est fixé à son extrémité inférieure à une embase reposant au fond de la mer et/ou enfoncée au fond de la mer, de préférence par l'intermédiaire d'une articulation mécanique flexible, et
b) une pluralité de conduites rigides verticales dénommées « riser », dont les extrémités inférieures sont reliées par l'intermédiaire d'éléments de conduites de coudées de jonction et des connecteurs automatiques à la pluralité de dites conduites reposant au fond de la mer, et
c) une pluralité de modules de flottabilité et de guidage supporté par ledit tendon, lesdits modules de flottabilité et de guidage supportant des éléments de flottabilité et guidant lesdits risers en position, de préférence régulièrement et symétriquement répartis autour dudit tendon, lesdits modules de flottabilité et de guidage constituant de préférence, une pluralité de structures indépendantes aptes à coulisser le long dudit tendon et le long desdits risers, ladite structure supportant des éléments de flottabilité et guidant lesdits risers en position, de préférence régulièrement et symétriquement répartis autour dudit tendon.

On pourra mettre en oeuvre notamment des modules de flottabilité tel que décrit dans WO 2006/136960 et FR-09 51218 déposée le 26 février 2009 au nom de la demanderesse.

Dans WO 00/49267 de la demanderesse, on a décrit une tour hybride multiple comportant un système d'ancrage avec un tendon vertical constitué soit d'un câble, soit d'une barre métallique, soit encore d'une conduite tendue à son extrémité supérieure par un flotteur. L'extrémité inférieure du tendon est fixée à une embase reposant au fond. Ledit tendon comporte des moyens de guidage répartis sur toute sa longueur à travers lesquels passe une pluralité de dits risers verticaux. Ladite embase peut être posée simplement sur le fond de la mer et rester en place par son propre poids, ou rester ancrée au moyen de piles ou tout autre dispositif propre à la maintenir en place. Dans WO 00/49267, l'extrémité inférieure du riser vertical est apte à être connectée à l'extrémité d'une manchette coudée, mobile, entre une position haute et une position basse, par rapport à ladite embase, à laquelle cette manchette est suspendue et associée à un moyen de rappel la ramenant en position haute en l'absence du riser. Cette mobilité de la manchette coudée permet d'absorber les variations de longueur du riser sous les effets de la température et de la pression du fluide le parcourant. En tête du riser vertical, un dispositif de butée, solidaire de celui-ci, vient s'appuyer sur le guide support installé en tête du flotteur et maintient ainsi la totalité du riser en suspension.

La liaison avec la conduite sous-marine reposant sur le fond de la mer est en général effectuée par une portion de conduite en forme de queue de cochon ou en forme de S, ledit S étant alors réalisé dans un plan soit vertical soit horizontal, la liaison avec ladite conduite sous-marine étant en général réalisée par l'intermédiaire d'un connecteur automatique.

Le tendon vertical est relié à son extrémité inférieure à l'embase par une articulation flexible de type à butée lamifiée commercialisée par la Société TECHLAM France ou du type roto-latch^{®}, disponible chez OILSTATES USA, connu de l'homme de l'art.

Ce mode de réalisation comprenant une multiplicité de risers maintenus par une structure centrale comportant des moyens de guidage est intéressant lorsque l'on peut pré-fabriquer à terre l'intégralité de la tour, avant de la remorquer en mer, puis une fois sur site, la cabaner en vue de sa mise en place définitive.

Pour ce faire, la technique utilisée est similaire à celle décrite dans WO-2006-136960 et WO-2008-056185, et qui consiste à suspendre les extrémités supérieures de conduites à une structure supérieure porteuse et à solidariser une pluralité de modules de flottabilité ou d'isolationflottabilité, au tendon central, par l'intermédiaire d'une pluralité d'éléments de structure solidaires du tendon et jouant aussi le rôle de guidage des diverses conduites verticales, leur permettant ainsi de s'allonger librement vers le bas lorsqu'elles sont pressurisées ou/et soumise à une température élevée (pétrole brut en provenance des puits).

Les différents éléments de structure et éléments de flottabilité sont régulièrement espacés sur toute la longueur du tendon vertical, ce qui permet de remorquer la tour en mer, laquelle flotte grâce à ses éléments de flottabilité ainsi répartis sur toute sa longueur.

La présente invention fournit également un procédé de remorquage en mer d'une tour et mise en place d'une installation selon l'invention, caractérisé en ce que ladite tour comprend les étapes successives suivantes dans lesquelles :
1) on préfabrique à terre une dite tour, et
2) ladite tour est remorquée en mer par un navire de pose en position horizontale, ladite tour flottant en surface grâce à ses dits éléments de flottabilité répartis le long de ladite tour, et
3) on installe un corps mort à l'extrémité inférieure de ladite tour et,
4) on cabane ladite tour dont on connecte l'extrémité inférieure à ladite articulation mécanique flexible au niveau de ladite embase, et
5) on descend ladite structure de guidage depuis le navire de pose (11) et on la connecte au sommet de ladite tour, et
6) de préférence, on déballaste un bidon de flottabilité de ladite structure de guidage, puis on déconnecte le câble de descente de ladite structure de guidage, de telle sorte que par sa flottabilité propre ladite structure de guidage reste alors en position sensiblement verticale au-dessus de ladite tour, et
7) on éloigne le navire de pose et on déplace le support flottant en surface jusqu'à arriver au niveau de ladite structure de guidage, puis l'on ancre au fond de la mer le support flottant avec des lignes d'ancrage, et
8) de préférence, on installe un câble de liaison et de tensionnement entre le support flottant et la structure de guidage, et on tensionne ledit câble pour maintenir ladite structure de guidage et ladite tour qui lui est reliée suffisamment raide pour permettre la pose subséquente desdites conduites flexibles, et
9) on rapproche le navire de pose et on descend chaque extrémité inférieure de conduite flexible à l'aplomb et à travers lesdits éléments de guidage, puis on réalise la connexion des extrémités inférieures des conduites flexibles au niveau des extrémités supérieures desdits risers, puis
10) on réalise la connexion des extrémités inférieures des risers avec les extrémités des conduites reposant au fond de la mer.

D'autres caractéristiques et avantages de la présente invention ressortiront mieux à la lumière de la description détaillée qui va suivre, faite de manière illustrative et non limitative, en référence aux dessins sur lesquels :
- la figure 1 est une vue de côté d'une installation de liaison fond-surface selon l'invention, reliée à un FPSO 1 équipé d'un touret 2 en porte à faux sur l'avant, l'ensemble étant au repos, en configuration sensiblement verticale,
- la figure 1A est une vue présentant des courbes en chaînette symétriques et inversées au-dessus et respectivement en dessous des éléments de guidage 5b de la structure de guidage 5.
- la figure 2 est une vue de côté similaire à celle de la figure 1, dans laquelle le vent et le courant ont fait pivoter le navire de 180°, l'axe Z₁Z'₁ de la tour 4 étant alors inclinée de ß vers la gauche par rapport à l'axe Z₀Z₀', vertical passant par l'embase,
- la figure 3 est une vue de côté détaillant le remorquage sur site d'une tour 4 puis son cabanage et sa solidarisation à une embase 8 reposant sur le fond de la mer 12,
- la figure 4 est une vue de côté de la tour de la figure 3, détaillant la mise en place à partir d'un navire de pose 11 d'une structure de guidage 5 au sommet de ladite tour,
- la figure 5 est une vue de côté relative à la figure 4 montrant la mise en place d'un FPSO ancré sur touret en porte à faux sur l'avant, un câble de tensionnement 6 reliant le sommet de ladite structure de guidage 5 au dit touret, et détaillant l'installation d'un flexible de liaison 7,
- la figure 6 est une vue de côté d'un FPSO ancré sur un touret interne audit FPSO, les conduites flexibles 7 passant depuis leur extrémité inférieure 7-1' au sommet de la tour 4 successivement dans des premiers éléments de guidage 5b, puis des seconds éléments de guidage 5b' avant d'atteindre le touret 2,
- la figure 6A est une vue de côté détaillant un risque d'endommagement d'une conduite flexible 7 par blocage et mise en compression de cette dernière à l'entrée 5b1 où elle rentre en contact avec un élément de guidage 5b qu'elle traverse,
- la figure 7A est une vue de côté en arraché détaillant un premier moyen d'assurer le tensionnement du câble de liaison et tensionnement 6 avec le sommet de la tour 4, à l'aide d'un contrepoids 23, ledit contrepoids étant situé dans la structure même du touret,
- la figure 7B est une variante de la figure 7A, dans laquelle le contrepoids 23 est situé à l'extérieur dudit touret, et à l'intérieur de la structure du FPSO,
- la figure 8 est un deuxième moyen d'assurer le tensionnement du câble de liaison 6 avec le sommet de la tour, à l'aide d'un tensionneur hydraulique 30 associé à des accumulateurs hydrauliques,
- la figure 8A détaille le moufflage du câble de tensionnement 6 à chacune des extrémités du vérin du tensionneur de la figure 8,
- la figure 9A est une vue en coupe médiane verticale d'une structure de guidage 5,
- la figure 9B est une vue de dessus d'une structure de guidage de la figure 9A, comportant 12 éléments de guidage 5b répartis circulairement et régulièrement sur la périphérie 5-1 de la structure de guidage 5.
- la figure 10 représente une vue schématique d'une tour équipée de modules de flottabilité et de guidage 4cᵢ.

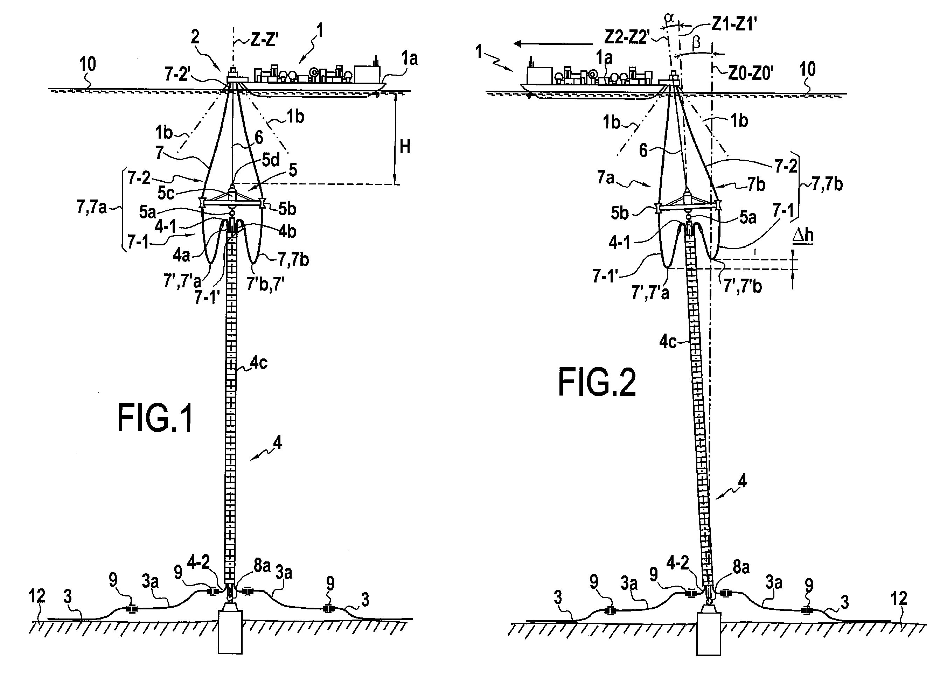

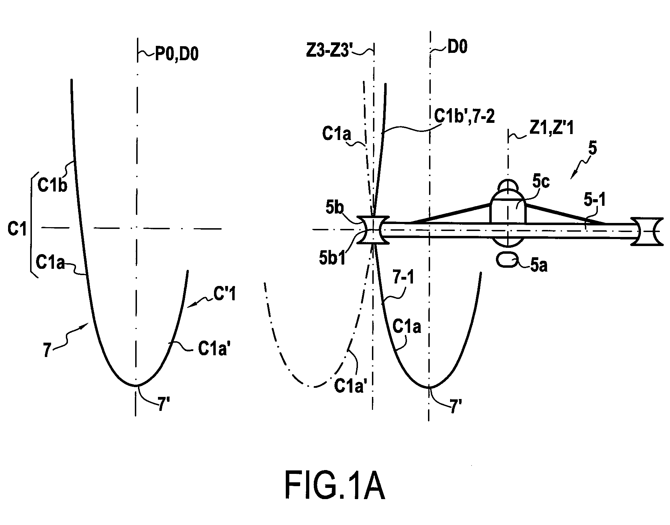

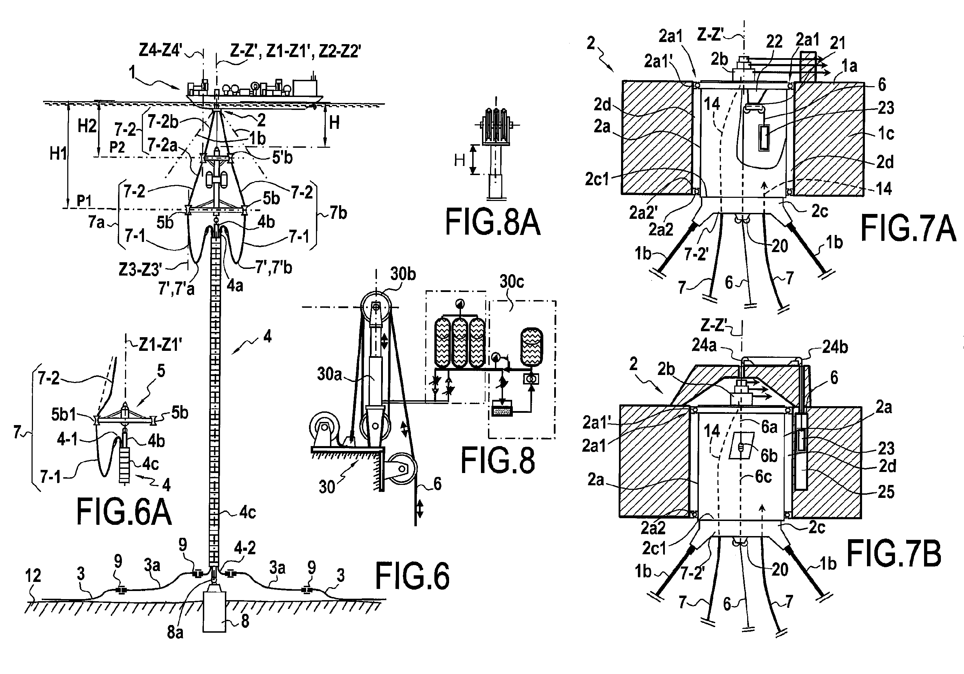

Sur la figure 1 on a représenté en vue de côté un support flottant de type « FPSO » 1 solidaire d'un touret 2 situé en porte à faux sur l'avant dudit FPSO, ledit touret étant ancré par une pluralité de lignes d'ancrage 1b reliés à des ancres non représentées plantées dans le sol sous-marin 12. Le touret, connu de l'homme de l'art, est représenté sur les figures 7A-7B et présente une partie cylindrique centrale 2a sensiblement fixe en rotation par rapport au sol marin 12, à l'intérieur d'une cavité 2d traversant la coque 1c du support flottant 1. Ladite partie cylindrique centrale 2a et la coque 1c coopèrent en rotation relative grâce à des paliers de roulement supérieur 2a1 et inférieur 2a2, dont les parties externes 2a' sont solidaires de la coque 1c et/ou du pont 1a du support flottant 1. Ceci permet au FPSO de pivoter librement autour d'un axe vertical ZZ' du touret et de se positionner dans une direction correspondant à la résultante des efforts engendrés par la houle, le vent et le courant sur le FPSO et ses superstructures, sans que la partie cylindrique centrale 2a du touret 2 ne pivote sensiblement.

L'axe vertical ZZ' correspond à l'axe de la cavité 2d et de la partie cylindrique centrale 2a du touret 2 ci-après.

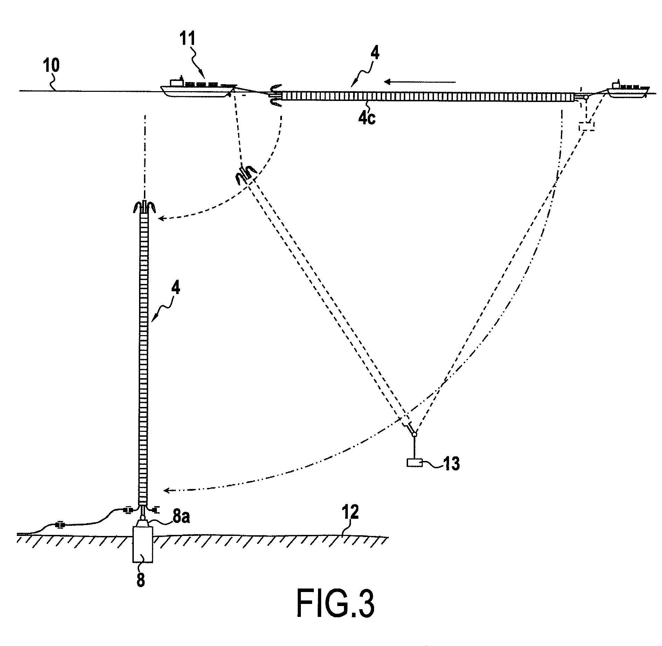

Au repos, l'axe ZZ' du touret 2 est situé à la verticale de l'axe Z₀Z₀' de l'embase 8 d'une tour hybride multi-riser 4. La tour 4 comporte une pluralité de conduites rigides verticales ou riser en acier 4a organisé(e)s en faisceaux tout autour d'un tendon central 4b relié à ladite embase 8 par une articulation mécanique, de préférence une articulation à joints flexibles 8a. Des éléments de flottabilité 4c sont répartis le long de la tour 4 et donnent à l'ensemble une flottabilité positive, ce qui permet de tensionner verticalement la tour 4, dont l'axe Z₁Z₁' peut toutefois adopter une inclinaison angulaire ß par rapport à la verticale Z₀Z₀' pouvant aller jusqu'à 10 à 15° au maximum lorsque le support flottant est soumis à des mouvements extrêmes dus au vent, à la houle ou au courant. La valeur de l'angle ß dépend de la raideur de l'ancrage 1b du FPSO. Chacune des conduites rigides 4a est équipée, en tête d'un dispositif appelé « col de cygne » 4-1 assurant la liaison avec l'extrémité d'une conduite flexible 7. Et, chacune desdites conduites rigides 4a est équipée en pied d'un coude, notamment d'un élément de conduite coudée 4-2 à l'extrémité duquel est installée la partie mâle/femelle d'un connecteur 9 coopérant avec la partie femelle/mâle dudit connecteur automatique 9 solidaire d'une pièce de jonction 5a constituée également d'un élément de conduite comprenant plusieurs courbures, reliant de manière connue une conduite 3 reposant sur le fond de la mer 12. Les éléments de flottabilité 4c, répartis le long de la tour 4 donnant à l'ensemble une flottabilité positive, permet en outre d'effectuer le remorquage sur site et les premières phases de dépose d'installation selon l'invention dans d'excellentes conditions de sécurité, comme il sera expliqué plus avant en référence à la figure 3.

Au sommet de la tour 4, on installe une structure de guidage 5 reliée audit sommet de la tour par une articulation mécanique souple de type chaîne 5a, et au touret 2 par un câble de tensionnement 6 relié en 5d à ladite structure 5, par exemple au sommet d'un bidon de flottabilité 5c intégré axialement à ladite structure de guidage 5 disposée dans l'alignement Z₁Z₁' de la tour 4. En cas de mouvement du FPSO 1, une inclinaison angulaire α peut se créer entre l'axe Z₂Z₂' du câble de tensionnement 6 relié au touret 2 en surface et l'axe Z₁Z₁' de la tour 4 et correspondant sensiblement à celui de la structure de guidage 5. Une pluralité d'éléments de guidage 5b sont répartis circulairement, de préférence régulièrement à la périphérie 5-1 de ladite structure de guidage 5, chacun d'eux recevant, c'est-à-dire étant traversé par une conduite flexible 7 reliant à son extrémité inférieure 7-1' le dispositif col de cygne 4-1 et à son extrémité supérieure 7-2', la structure d'amarrage 2c accrochée à la paroi de fond 2c-1 de ladite partie centrale cylindrique 2a, qui constitue la partie interne du touret 2. La ligne centrale virtuelle de chacune des conduites flexibles 7 est situé sensiblement dans le même plan que le plan axial vertical dudit col de cygne 4-1, lequel plan axial vertical comporte aussi les axes verticaux Z₃Z₃' et Z₄Z₄' des éléments de guidage 5b et 5b'. Les cols de cygne et conduites flexibles 7 sont reliées à un raccord 2b à joint tournant sur le pont 1a par l'intermédiaire de secondes conduites 14 traversant la partie interne centrale cylindrique 2a du touret 2 de façon connue.

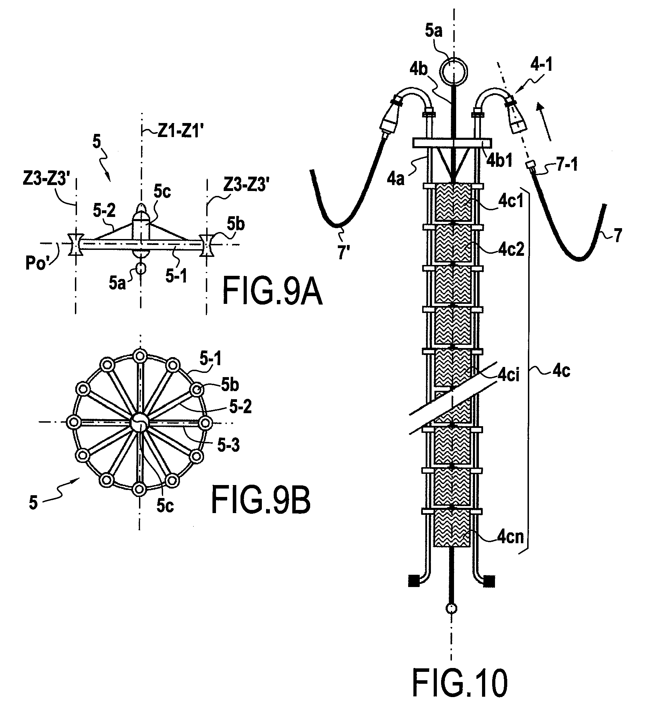

Sur les figures 9A et 9B, les éléments de guidage 5b au nombre de 12 sont disposés régulièrement, symétriquement et circulairement autour d'un bidon axial 5c central, lesdits éléments de guidage 5b étant supportés par des éléments de structure 5-2 disposés radialement assurant la jonction des éléments de guidage 5b avec le bidon 5c d'une part, et d'autre part, par des éléments de structure périphériques 5-1 assurant la jonction entre deux éléments de guidage 5b successifs en périphérie de la structure de guidage 5. Les conduites flexibles 7 adoptent des courbures en configuration géométrique de chaînette, c'est-à-dire dont le rayon de courbure augmente continûment depuis son point bas jusqu'à un point haut selon une formule connue intégrant une fonction Cosinus hyperbolique.

Ladite première portion de conduite flexible 7-1 adopte dessous l'élément de guidage 5b qu'elle traverse une configuration dite en chaînette plongeante avec un point bas 7', ladite chaînette plongeante étant composée des deux courbes en chaînette respectivement descendante C1a et remontante C'1a symétriques par rapport à l'axe vertical D₀ passant par le point bas 7', comme représenté sur la figure 1A.

Ce type de courbe en chaînette, et notamment en chaînette plongeante est bien connu de l'homme de l'art et est décrit dans les brevets antérieurs de la demanderesse.

Sur la figure 1A, on voit également que la portion supérieure de conduite flexible 7-2 de courbe en chaînette C1b' au-dessus de l'élément de guidage 5b ne se poursuit pas en suivant la même courbe en chaînette C1a' dans la portion inférieure de conduite flexible 7-1 après son contact en 5b1 avec l'élément de guidage 5b qu'elle traverse, la portion de courbe C1a' étant la courbe naturelle que suivrait la conduite flexible 7-1 en dessous de l'élément de guidage 5b si son extrémité 7-1' n'était pas rapprochée du sommet de la tour pour y être fixée. En effet, pour rapprocher l'extrémité inférieure 7-1' de la portion de conduite 7-1 jusqu'au sommet de la tour 4, à partir de son passage en 5b1 à travers d'éléments de guidage 5b, la courbe C1b' de la conduite flexible 7-2 s'inverse, c'est-à-dire se poursuit en suivant une courbe en chaînette C1a sensiblement symétrique de la portion de courbe en chaînette C1a' par rapport à l'axe vertical Z₃Z₃' des éléments de guidage 5b au niveau du point de contact 5b1. La courbe de la conduite flexible 7 subit donc au point de contact 5b1 avec l'élément de guidage 5b, une quasi-inversion du sens de variation de sa courbure.

En jouant sur la flottabilité du bidon 5c, que l'on déballaste par des moyens connus mais non représentés, on augmente la raideur de la tour 4, c'est-à-dire la capacité de la tour à revenir vers sa position verticale naturelle. Ainsi, en augmentant la flottabilité du bidon 5c, on augmentera la tendance de la tour à rester verticale lorsque le FPSO se trouve entraîné par la houle, le vent et le courant, par exemple vers la gauche comme représenté sur la figure 2. De la même manière, en augmentant la tension dans le câble 6, la tour aura une tendance plus prononcée à suivre de plus près les mouvements du FPSO, et donc prendre une position plus ou moins inclinée ß selon l'ampleur du déplacement dudit FPSO.

Lorsque l'axe Z₂Z₂' du câble de tensionnement 6 s'écarte de sa position verticale ZZ' compte tenu du déplacement du FPSO 1, un angle α commence par se créer entre le câble 6 et l'axe Z₁Z₁' de la tour 4. Ceci provoque la déformation des deux chaînettes plongeantes. Le point bas 7a' de la portion 7-1 de chaînette plongeante la plus éloignée de l'axe vertical Z₀Z₀' de l'embase 8, descend par rapport à sa position 7a₀' initiale de repos lorsque l'ensemble de la tour et de la structure de guidage 5 sont sensiblement à la verticale dans l'axe du touret 2. Et, le point bas d'inflexion 7b' de la première portion de conduite flexible 7-1 la plus proche de l'axe ZZ' de l'embase 8 passant au pied de la tour 4, monte par rapport à sa position initiale de repos 7b'₀ lorsque la tour 4 et la structure de guidage 5 étaient à la verticale dans l'axe ZZ' du touret 2. On règle le tensionnement du câble 6 de manière à ce que l'angle α entre l'axe Z₂Z₂' du câble de tensionnement 6 et l'axe Z₁Z₁' de la tour 4 ne dépassent pas 5°, l'axe Z₁Z₁' de la tour 4 sensiblement aligné avec celui de la structure de guidage ne dépassant pas 5°.

On comprend qu'à excursion identique du FPSO 1 (pour une valeur d'angle ß donné), lié essentiellement à la raideur du système d'ancrage 1b, la variation de hauteur Δh entre les pieds 7a' et 7b' des chaînettes plongeantes de 7a et 7b, sera diminuée si l'angle α est diminué et si le tensionnement du câble 6 est augmenté.

Les deux conduites flexibles 7a-7b coulissent librement dans leurs premiers éléments de guidage respectifs 5b (représentés sur les figures 1 et 2) et gardent toujours naturellement des configurations de chaînette tel que décrit ci-dessus grâce aux dits éléments de guidage 5b avec lesquels elles sont en contact 5b-1, garantissant ainsi une réserve de flexibilité liée à un fonctionnement optimal de la liaison fond-surface.

Sur les figures 3, 4 et 5, on a détaillé les différentes phases d'installation sur site de la tour. Dans un premier temps, on préfabrique la tour à terre en position horizontale, puis on la remorque sur site toujours en position horizontale ; elle flotte grâce à l'ensemble des éléments de flottabilité 4c répartis le long de ladite tour. Puis on installe un corps mort 13 en pied de tour et on cabane, de manière connue ladite tour que l'on connecte alors à l'embase 8 au niveau de l'articulation mécanique flexible 8a. De par sa flottabilité propre, la tour reste alors naturellement en position verticale comme représenté sur la figure 3.

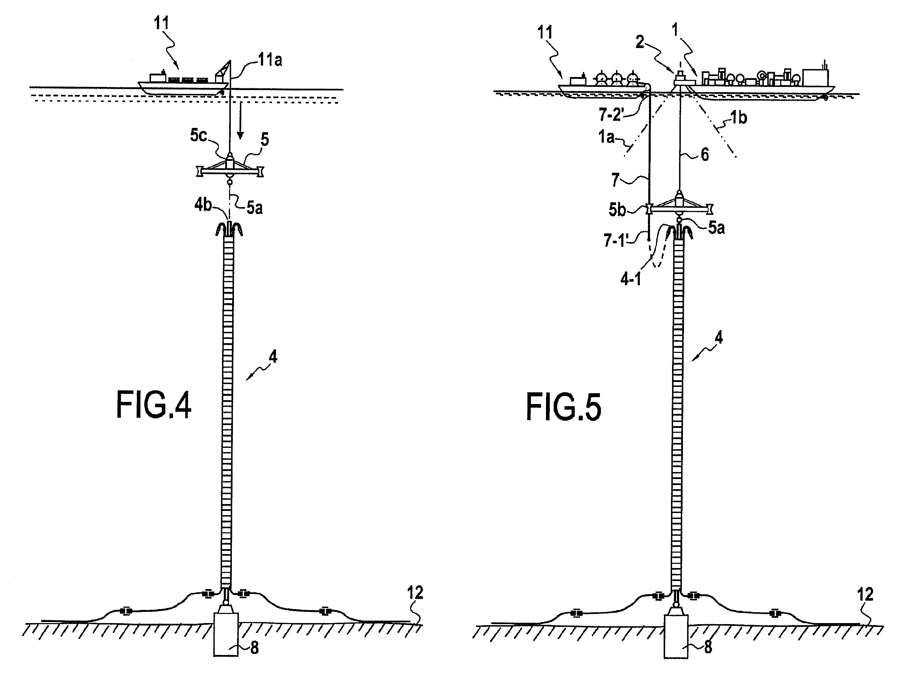

Un navire d'installation 11 descend alors la structure de guidage 5 et la connecte avec la chaîne 5a au sommet de la tour, comme représenté sur la figure 4. Le bidon 5c est alors déballasté, puis le câble de descente 11a est déconnecté. De par sa flottabilité propre 5c, la structure de guidage 5 reste alors en position sensiblement verticale, de la même manière que la tour 4.

On vient alors installer le FPSO que l'on ancre sur place avec des lignes d'ancrage 1b, comme représenté sur la figure 5, puis on installe le câble de tensionnement 6 que l'on prétensionne à une valeur adéquate. Il ne reste alors plus qu'à installer chacune des conduites flexibles 7 depuis un navire de pose 11 de manière connue, en la faisant passer à travers les éléments de guidage 5b, puis en connectant son extrémité inférieure 7-1' à l'extrémité du col de cygne 4-1 et enfin en transférant l'extrémité supérieure 7-2' de ladite conduite flexible 7 à la structure d'amarrage 2c du touret 2 pour obtenir finalement la configuration de la figure 1.

Sur la figure 6 on a représenté une variante de l'invention installée sur un FPSO possédant un touret interne situé dans la partie tiers avant du navire 1. La structure de guidage présente avantageusement un premier étage de premiers éléments de guidage 5b situés au niveau d'un premier plan inférieur de guidage P1 à une profondeur H1 répartis sur une circonférence de rayon R1 de 5 à 25m, et un second étage de deuxièmes éléments de guidage 5b' situés à un plan supérieur de guidage P2 situé à une profondeur H2 entre le touret 2 et le premier plan de guidage P1. Lesdits deuxièmes éléments de guidage 5b' sont répartis en périphérie du deuxième étage de la structure de guidage 5b, avec leurs axes Z₄Z₄'situés dans un même plan vertical que les axes Z₃Z₃' des premiers éléments de guidage. Ainsi, une conduite flexible 7 passera par les deux éléments de guidage 5b' et 5b disposés dans un même plan passant par lesdits axes Z₃Z₃', Z₄Z₄', ainsi que l'axe Z₁Z₁' de la structure de guidage 5, de sorte que les courbes de chaînette des différentes portions 7-1,7-2a,7-2b sont situées sensiblement dans un même plan vertical. La portion de conduite flexible 7-2a est située entre un premier élément de guidage 5b et un deuxième élément de guidage 5b', tandis que la deuxième portion 7-2b de deuxième portion de conduite 7-2 est située entre le deuxième élément de guidage 5b' et l'extrémité supérieure 7-2' de la conduite flexible 7.

En pratique, on installe la structure de guidage 5b à l'abri des effets de la houle et la hauteur H2 de l'étage supérieur P2 des éléments de guidage 5b' sera de 40 à 200 m et la hauteur H1 du premier étage de premiers éléments de guidage 5b la plus profonde sera située à une profondeur H1 de 45 à 250 m.

Cette configuration présente l'avantage d'améliorer considérablement le guidage de chacune des conduites flexibles 7, évitant ainsi les risques d'endommagement des conduites flexibles par coincement de la conduite excessivement courbée en son point de contact 5b-1 dans les éléments de guidage 5b, phénomène redouté surtout en cas de tempête ou de conditions océano-météo sévères. Sur la figure 6A on a illustré un tel coincement, redouté principalement au niveau du premier plan de guidage P1. En effet, une telle configuration de coincement à l'entrée de l'élément de guidage met localement la conduite flexible 7 en compression axiale au niveau 5b-1 du premier élément de guidage 5b, ce qui est préjudiciable à l'intégralité de la conduite flexible en pression et risque de conduire à son éclatement, donc à sa ruine et des pollutions considérables.

Sur la figure 7A on a représenté en coupe et en arraché un premier mode de tensionnement du câble 6 en référence au touret interne de la figure 6. Ledit câble 6 rentre dans le touret 2 de préférence à l'axe dudit touret et est guidé par un chaumard ou des galets 20. Il est tourné sur un dispositif à poulies 21 solidaire en 22 de la structure dudit touret puis est relié à son extrémité à un contrepoids 23 se déplaçant selon un axe vertical parallèle à l'axe ZZ' dans un puits de guidage non représenté, solidaire dudit touret. Ce moyen présente l'avantage d'être très simple et ne demande qu'un minimum d'entretien. Par contre, pour changer la valeur de la tension, il convient de modifier le poids dudit contrepoids, soit en ajoutant/enlevant des masses, soit en remplissant/vidant un réservoir, par exemple simplement avec de l'eau de mer, ledit réservoir étant solidaire dudit contrepoids. Un autre avantage de cette disposition est que le câble, le contrepoids et le touret restent dans une position sensiblement fixe en rotation vis-à-vis du fond marin 3. Par contre cette disposition nécessite une grande hauteur de débattement pour le contrepoids, ce qui ne pose pas de problème dans le cas de touret intégré tel que décrit en référence à la figure 6. Cette disposition n'est en général pas envisageable dans le cas de touret externe en raison de la faible hauteur de la structure d'ensemble.

Sur la figure 7B on a représenté en coupe un second mode de tensionnement du câble 6 en référence au touret interne de la figure 6. Ledit câble 6 rentre dans le touret 2 de préférence à l'axe dudit touret et est guidé par un chaumard ou des galets 20. Il traverse complètement le touret ainsi que le raccord à joint tournant 2b auquel sont raccordées les conduites flexibles 14, et ressort au dessus du pont 1a du FPSO, puis est tourné sur un dispositif à poulies 24a-24b solidaire de la structure du pont 1a du FPSO, puis son extrémité est reliée à un contrepoids 23 se déplaçant selon l'axe vertical parallèle à l'axe ZZ' dans un puits de guidage 25 intégré dans la coque du FPSO. Ce moyen présente lui aussi l'avantage d'être très simple et ne demande qu'un minimum d'entretien. Par contre, pour changer la valeur de la tension, il convient de modifier le poids dudit contrepoids 23, soit en ajoutant/enlevant des masses, soit en remplissant/vidant un réservoir, par exemple simplement avec de l'eau de mer, ledit réservoir étant solidaire dudit contrepoids.

Du fait que le câble 6 connecté au sommet de la tour 4 est sensiblement fixe en rotation par rapport au fond marin, et que le contrepoids 23, qui se trouve solidaire du navire 1, est entraîné en rotation relative avec celui-ci par rapport à la partie du câble à l'intérieur du touret 2, on dispose avantageusement un tourillon ou émerillon 6b sur le parcours du câble, de préférence à l'intérieur du touret 2, par exemple à mi-hauteur dudit touret, de telle manière que la partie inférieure 6c du câble 6 reste sensiblement fixe en rotation sans torsion vis-à-vis du fond marin, et que la partie supérieure 6a dudit câble de tensionnement 6 au dessus de l'émerillon 6b suive les mouvements du FPSO sans engendrer de torsion dans le câble, quelque soit le nombre de tours effectué par le navire autour de son axe vertical ZZ'. Cette disposition est applicable dans le cas de touret intégré tel que décrit en référence à la figure 6 ou dans le cas d'un touret en porte à faux sur l'avant tel que décrit en référence à la figure 1. Dans le cas du touret en porte à faux, l'émerillon 6b sera installé préférentiellement entre la poulie 24a et la paroi de fond 2c-1 du touret. Mais, dans certains cas, on ne disposera d'un débattement vertical suffisant de l'émerillon 6b, en cas de mouvements extrêmes du FPSO. On installera alors, le tourillon ou émerillon 6b, soit dans l'eau à bonne distance dessous du touret, soit en position axiale horizontale entre les poulies 24a et 24b.

Sur la figure 8 on a représenté un troisième mode de tensionnement du câble 6 basé sur l'utilisation d'un tensionneur hydraulique 30 solidaire du touret 2 ou du pont 1a du FPSO. Ce type de tensionneur, connu de l'homme de l'art est constitué d'un vérin hydraulique simple effet 30a muni en pied et en tête de tige de vérin d'un moufflage de poulie 30b, le câble 6 étant moufflé de manière connue autour desdites poulies et son extrémité étant reliée à un point fixe solidaire du support dudit vérin. Un groupe hydraulique 30c constitué d'accumulateurs et de pompes maintient une pression donnée sensiblement constante dans le vérin 30a, donc une tension donnée sensiblement constante dans le câble 6, quelque soit la quantité de câble enroulé ou déroulé. Ce mode de tensionnement est plus complexe que l'utilisation d'un contrepoids, mais il présente l'avantage de pouvoir être ajusté en temps réel, en changeant simplement la consigne de pression au sein des accumulateurs, ce qui présente un grand avantage dans le cas de conditions océano-météo sévères, nécessitant le cas échéant un ajustement fin de la rigidité de la tour pour limiter au minimum les contraintes infligées aux flexibles de liaison qui restent les éléments sensibles de ce type de liaison fond-surface.

Sur la figure 10, on a représenté un mode de réalisation dans lequel les éléments de flottabilité 4c de la tour 4 sont constitués par des modules de flottabilité et de guidage 4cᵢ coulissant le long du tendon vertical 4b et des risers 4a, ces derniers étant solidarisés à leurs sommets par une structure porteuse 4b1, et symétriquement répartis autour du tendon vertical 4b. Lesdits modules de flottabilité et de guidage 4cᵢ coopérant également en coulissement avec les risers 4a et tendon vertical 4b de manière à maintenir les risers uniformément et régulièrement répartis autour du tendon vertical 4b.

## Revendications

1. Installation de liaison fond-surface entre une pluralité de conduites sous-marines (3) reposant au fond de la mer (12) et un support flottant (1) en surface (10) et ancré (1a) au fond de la mer, comprenant :
a) un dit support flottant comprenant un touret (2) comprenant une cavité (2d) au sein d'une structure déportée à l'avant du support flottant ou intégrée dans ou dessous la coque du support flottant, de préférence ladite cavité traversant la coque du support flottant sur toute sa hauteur, ledit touret (2) comprenant en outre une partie interne cylindrique (2a) apte à rester sensiblement fixe par rapport au fond de la mer à l'intérieur de ladite cavité (2d) lorsque ledit support flottant (1) est entraîné en rotation autour de l'axe vertical (ZZ') de ladite partie interne (2a) ou dite cavité (2d) du touret, ledit support flottant étant ancré (1b) au fond de la mer par des lignes (1b) fixées à leurs extrémités supérieures à ladite partie interne cylindrique (2a) du touret (2), et
b) une pluralité de conduites flexibles (7,7a-7b) s'étendant depuis ledit touret auquel leurs extrémités supérieures (7-2') sont reliées, jusqu'aux extrémités supérieures d'une respectivement pluralité de conduites rigides (4a) auxquelles les extrémités inférieures (7-1') desdites conduites flexibles sont reliées, lesdites conduites rigides (4a) assurant la liaison entre lesdites conduites flexibles (7,7a,7b) et respectivement ladite pluralité de conduites sous-marines (3) reposant au fond de la mer, lesdites conduites rigides (4a) étant réunies entre elles et/ou guidées au moins à leurs sommets par une structure porteuse (4b,4b1) tensionnée par des éléments de flottabilité (4c,5c), ladite structure porteuse (4b,4b1) étant reliée à une embase (8) reposant ou enfoncée au fond de la mer, de préférence par l'intermédiaire d'une articulation mécanique flexible (8a), et ladite structure porteuse comprenant de préférence un tendon vertical (4b) s'étendant jusqu'à ladite articulation mécanique flexible (8a),
**ladite installation étant caractérisée en ce qu'**elle comprend une structure de guidage (5) maintenue en subsurface (H) entre ledit touret (2) et ladite structure porteuse (4b,4b1), de préférence solidaire (5a) de ladite structure porteuse (4b) au sommet desdites conduites rigides (4a), ladite structure de guidage (5) étant apte à guider lesdites conduites flexibles (7) entre d'une part, leurs extrémités supérieures (7-2') reliée à ladite partie interne cylindrique (2a) du touret (2) et d'autre part, leurs extrémités inférieures (7-1') reliées aux extrémités supérieures desdites conduites rigides (4a), de préférence par l'intermédiaire de dispositifs en col de cygne (4-1), ladite structure de guidage (5) comprenant une pluralité de premiers éléments de guidage (5b) traversés respectivement par ladite pluralité de conduites flexibles, de telle sorte qu'une dite conduite flexible comprend au moins une première portion de conduite flexible (7-1) en configuration de chaînette plongeante, comprenant un point bas d'inflexion (7',7a',7b') intermédiaire entre d'une part l'extrémité inférieure (7-1') de ladite conduite flexible reliée à l'extrémité supérieure d'une dite conduite rigide (4a), et d'autre part, le point de contact (5b1) de ladite conduite flexible (7,7a,7b) au niveau dudit premier élément de guidage (5b) qu'elle traverse, et une deuxième portion de conduite flexible (7-2) s'étendant entièrement au-dessus dudit point de contact (5b1) de la conduite flexible avec ledit premier élément de guidage (5b), selon une courbure en forme de chaînette depuis ledit élément de guidage (5b) qu'elle traverse jusqu'au dudit touret (2) auquel son extrémité supérieure (7-2') est reliée.

2. Installation selon la revendication 1, **caractérisée en ce que** ladite structure de guidage (5) comporte de préférence au moins 4, de préférence encore 6 à 12 dits premiers éléments de guidage (5b) répartis, de préférence symétriquement et régulièrement, de préférence encore circulairement, en périphérie de ladite structure de guidage, et dont les axes (Z₃Z₃') sont situés à une distance (R1) d'au moins 3m, de préférence de 3 à 25 m, de l'axe (Z₁Z₁') de ladite structure de guidage.

3. Installation selon la revendication 1 ou 2, **caractérisée en ce que** ladite structure de guidage (5) comporte au moins un élément de flottabilité (5c) apte à maintenir ladite structure de guidage au-dessus de ladite structure porteuse (4b,4b1) des conduites rigides, à une profondeur (H) d'au moins 25 m, de préférence de 50 à 250 m de la surface (10).

4. Installation selon l'une des revendications 1 à 3, **caractérisée en ce que** ledit élément de flottabilité (5c) est constitué par au moins un bidon dont on peut faire varier la force de tensionnement par ballastage ou déballastage dudit bidon.

5. Installation selon l'une des revendications 1 à 4, **caractérisée en ce que** ladite structure de guidage (5) est reliée à ladite structure porteuse (4b) par un lien constituant une articulation mécanique souple (5a) entre ladite structure de guidage (5) et ladite structure porteuse (4b,4b1).

6. Installation selon l'une des revendications 1 à 5, **caractérisée en ce que** ladite structure de guidage (5) comporte au moins un premier étage (P₁) de dits premiers éléments de guidage (5b) situés à une profondeur (H1) et au moins un deuxième étage (P₂) de deuxièmes éléments de guidage (5b') situés au-dessus desdits premiers éléments de guidage à une profondeur (H2) inférieure à la profondeur (H1) desdits premiers éléments de guidage (5b) et à travers lesquels passent lesdites deuxièmes portions de conduites flexibles (7-2), l'axe (Z₄Z₄') de chaque dit deuxième élément de guidage étant positionné sensiblement dans un même plan vertical, mais à une distance (R2) plus proche de l'axe (Z₁Z'₁) de ladite structure de guidage que celui (Z₃Z₃') dudit premier élément de guidage au-dessus duquel ledit deuxième élément de guidage est situé et à travers lequel passe une même conduite flexible (7).

7. Installation selon l'une des revendications 1 à 6, **caractérisée en ce que** ladite structure de guidage est reliée au dit touret (2) par au moins un câble de liaison et de tensionnement (6).

8. Installation selon la revendication 7, **caractérisée en ce que** ledit câble de tensionnement (6) est tensionné de manière à ce que l'angle α entre l'axe (Z₂Z₂') dudit câble de tensionnement et l'axe (Z₁Z₁') de ladite structure porteuse, et de préférence ledit tendon (4b,4b'), reste inférieur à 5°, ledit support flottant étant ancré (1b) au fond de la mer de telle manière que l'angle ß d'inclinaison entre l'axe (Z₁Z'₁) de ladite structure porteuse et de préférence dudit tendon vertical (4b) et la verticale (Z₀Z₀') passant par ladite embase, reste inférieur à 10° lorsque le support flottant est mouvementé de par l'agitation de la mer et/ou la force du vent en dépit de son ancrage (1b).

9. Installation selon la revendication 7 ou 8, **caractérisée en ce que** ledit câble de tensionnement (6) traverse ledit touret (2) de préférence sensiblement à l'axe (ZZ') dudit touret, puis est tourné sur des poulies (21,24a-24b) solidaires dudit touret et/ou de la structure (1a,1c) du support flottant, de préférence du pont (1a) de support flottant, avant d'être tensionné à son extrémité libre par un contrepoids (23) se déplaçant parallèlement à l'axe ZZ' dudit touret dans un puits de guidage (25) à l'intérieur dudit touret (2) ou respectivement à l'intérieur de la coque (1c) dudit support flottant.

10. Installation selon la revendication 7 ou 8, **caractérisée en ce que** ledit câble (6) est tensionné à l'aide d'un tensionneur hydraulique (30) solidaire du touret (2) ou du pont (1a) du support flottant, ledit tensionneur hydraulique (30) comportant au moins un vérin hydraulique (30a) coopérant avec un mouflage de poulie (30b), l'extrémité dudit câble de tensionnement (6) étant liée à un point fixe solidaire du support dudit vérin hydraulique (30a), et un groupe hydraulique (30c) constitué d'accumulateurs et de pompes étant aptes à maintenir une pression donnée sensiblement constante dans ledit vérin permettant de fournir une tension donnée sensiblement constante dans ledit câble de tensionnement (6).

11. Installation de guidage selon l'une des revendications 7 à 10, **caractérisée en ce que** ledit câble de tensionnement (6) coopère avec un émerillon (6b) sur le parcours du câble (6), de préférence à l'intérieur du touret (2), de telle manière que la partie inférieure (6c) du câble dessous ledit émerillon (6b) reste sans torsion lorsque la partie supérieure (6a) dudit câble de tensionnement (6) suit les mouvements en rotation relative (1) dudit support flottant par rapport à ladite partie cylindrique interne du touret (2).

12. Installation selon l'une des revendications 1 à 11, **caractérisée en ce qu'**elle comprend une structure d'amarrage (2c) fixée, de préférence de manière réversible, en sous-face de la paroi de fond (2c1), ladite partie cylindrique interne (2a) du touret (2), lesdites conduites flexibles (7) étant amarrées à ladite structure d'amarrage (2c) au niveau de leurs dites extrémités supérieures (7-2') et ledit support flottant (1) étant ancré au fond de la mer par l'intermédiaire de lignes d'ancrage (1b) amarrées à ladite structure d'amarrage (2c), de préférence une pluralité de secondes conduites de liaison (14) s'étendant à travers ledit touret (2) entre les extrémités supérieures (7-2') desdites conduites flexibles (7) et le pont (1a) du support flottant traversant la paroi de fond (2c1) de la partie cylindrique interne (2a) du touret et remontant jusqu'à un raccord (2b), de préférence de type à joint tournant, auquel sont raccordées lesdites secondes conduites de liaison (14), ledit raccord (2b) étant solidaire du support flottant, de préférence au niveau du pont (1a) du support flottant.

13. Installation selon l'une des revendications 1 à 12, **caractérisée en ce qu'**elle comporte une tour hybride multi-risers (4) comprenant :
a) un tendon vertical (4b) suspendu à au moins un flotteur (5b) immergé en subsurface, de préférence par l'intermédiaire d'une chaîne ou câble (5a), ledit tendon est fixé à son extrémité inférieure à une embase (8) reposant au fond de la mer et/ou enfoncée au fond de la mer (12), de préférence par l'intermédiaire d'une articulation mécanique flexible (8a), et
b) une pluralité de conduites rigides verticales (4a) dénommées « riser », dont les extrémités inférieures sont reliées par l'intermédiaire d'éléments de conduites de coudées de jonction (5a,4-2) et des connecteurs automatiques (9) à la pluralité de dites conduites reposant au fond de la mer (3), et
c) une pluralité de modules de flottabilité et de guidage (4c,4cᵢ avec i = 1 à n), supporté par ledit tendon (4b), lesdits modules de flottabilité et de guidage supportant des éléments de flottabilité et guidant lesdits risers en position, de préférence régulièrement et symétriquement répartis autour dudit tendon (4b), lesdits modules de flottabilité et de guidage constituant de préférence, une pluralité de structures indépendantes aptes à coulisser le long dudit tendon (4b) et le long desdits risers (4a), ladite structure (4c) supportant des éléments de flottabilité et guidant lesdits risers en position, de préférence régulièrement et symétriquement répartis autour dudit tendon.

14. Procédé de remorquage en mer d'une tour (4) et mise en place d'une installation selon la revendication 13, **caractérisé en ce que** ladite tour (4) comprend les étapes successives suivantes dans lesquelles :
1) on préfabrique à terre une dite tour (4), et
2) ladite tour (4) est remorquée en mer par un navire de pose (11) en position horizontale, ladite tour (4) flottant en surface (10) grâce à ses dits éléments de flottabilité (4c) répartis le long de ladite tour, et
3) on installe un corps mort (13) à l'extrémité inférieure de ladite tour et,
4) on cabane ladite tour dont on connecte l'extrémité inférieure à ladite articulation mécanique flexible (8a) au niveau de ladite embase (8), et
5) on descend ladite structure de guidage (5) depuis le navire de pose (11) et on la connecte (5a) au sommet de ladite tour (4), et
6) de préférence, on déballaste un bidon (5c) de flottabilité de ladite structure de guidage (5), puis on déconnecte le câble de descente (11a) de ladite structure de guidage, de telle sorte que par sa flottabilité propre (5c) ladite structure de guidage (5) reste alors en position sensiblement verticale au-dessus de ladite tour (4), et
7) on éloigne le navire de pose (11) et on déplace le support flottant (1) en surface jusqu'à arriver au niveau de ladite structure de guidage (5), puis l'on ancre au fond de la mer le support flottant avec des lignes d'ancrage (1b) et,
8) de préférence, on installe un câble de liaison et de tensionnement (6) entre le support flottant (1) et la structure de guidage (5), et on tensionne ledit câble pour maintenir ladite structure de guidage (5) et ladite tour qui lui est reliée suffisamment raide pour permettre la pose subséquente desdites conduites flexibles (7), et
9) on rapproche le navire de pose (11) et on descend chaque extrémité inférieure (7-1') de conduite flexible (7) à l'aplomb et à travers lesdits éléments de guidage (5b,5b'), puis on réalise la connexion des extrémités inférieures (7-1) des conduites flexibles (7) au niveau des extrémités supérieures (4-1) desdits risers (4a), puis
10) on réalise la connexion des extrémités inférieures des risers (4a) avec les extrémités des conduites (3) reposant au fond de la mer (12).

## Patentansprüche

1. Einrichtung zur Grund-Oberflächen-Verbindung zwischen einer Vielzahl von auf dem Meeresgrund (12) aufliegenden Unterwasserleitungen (3) und einem an der Oberfläche (10) befindlichen und am Meeresgrund verankerten (1 b) schwimmenden Träger (1), umfassend:
a) einen schwimmenden Träger mit einer Trommel (2), die einen Hohlraum (2d) innerhalb einer Struktur umfasst, welche am vorderen Teil des schwimmenden Trägers versetzt oder in den oder unter dem Rumpf des schwimmenden Trägers integriert ist, wobei vorzugsweise der Hohlraum den Rumpf des schwimmenden Trägers über dessen gesamte Höhe durchquert, wobei die Trommel (2) ferner einen zylindrischen Innenteil (2a) umfasst, der geeignet ist, innerhalb des Hohlraums (2d) gegenüber dem Meeresgrund im Wesentlichen fest zu bleiben, wenn der schwimmende Träger (1) um die vertikale Achse (ZZ') des Innenteils (2a) oder Hohlraums (2d) der Trommel drehangetrieben wird, wobei der schwimmende Träger durch Leinen (1 b), die an ihren oberen Enden an dem zylindrischen Innenteil (2a) der Trommel (2) befestigt sind, am Meeresgrund verankert ist (1 b), und
b) eine Vielzahl von flexiblen Leitungen (7, 7a-7b), die sich von der Trommel, mit der ihre oberen Enden (7-2') verbunden sind, bis zu den oberen Enden jeweils einer Vielzahl von starren Leitungen (4a), mit denen die unteren Enden (7-1') der flexiblen Leitungen verbunden sind, erstrecken, wobei die starren Leitungen (4a) die Verbindung zwischen den flexiblen Leitungen (7, 7a, 7b) und jeweils der Vielzahl von auf dem Meeresgrund aufliegenden Unterwasserleitungen (3) sicherstellen, wobei die starren Leitungen (4a) wenigstens an ihren Scheiteln durch eine Tragstruktur (4b, 4b1), die durch Auftriebselemente (4c, 5c) gespannt ist, untereinander verbunden und/oder geführt sind, wobei die Tragstruktur (4b, 4b1) mit einem am Meeresboden aufliegenden oder eingelassenen Sockel (8) verbunden ist, vorzugsweise mittels eines mechanischen, flexiblen Gelenks (8a), und wobei die Tragstruktur vorzugsweise eine vertikale Sehne (4b), die sich bis zu dem mechanischen, flexiblen Gelenk (8a) erstreckt, umfasst,
wobei die Einrichtung **dadurch gekennzeichnet ist, dass** sie eine Führungsstruktur (5) umfasst, die oberflächennah (H) zwischen der Trommel (2) und der Tragstruktur (4b, 4b1) gehalten ist, vorzugsweise mit der Tragstruktur (4b) am Scheitel der starren Leitungen (4a) fest verbunden (5a) ist, wobei die Führungsstruktur (5) geeignet ist, die flexiblen Leitungen (7) zwischen einerseits ihren oberen Enden (7-2'), die mit dem zylindrischen Innenteil (2a) der Trommel (2) verbunden sind, und andererseits ihren unteren Enden (7-1'), die mit den oberen Enden der starren Leitungen (4a), vorzugsweise mittels Schwanenhalsvorrichtungen (4-1), verbunden sind, zu führen, wobei die Führungsstruktur (5) eine Vielzahl von ersten Führungselementen (5b) umfasst, die jeweils von der Vielzahl von flexiblen Leitungen durchgriffen werden, so dass eine flexible Leitung wenigstens einen ersten flexiblen Leitungsabschnitt (7-1) mit der Form einer eintauchenden Kettenlinie umfasst, der einen unteren Zwischenknickpunkt (7', 7a' 7b') zwischen einerseits dem unteren Ende (7-1') der flexiblen Leitung, das mit dem oberen Ende einer starren Leitung (4a) verbunden ist, und andererseits der Kontaktstelle (5b1) der flexiblen Leitung (7, 7a, 7b) im Bereich des ersten Führungselements (5b), das sie durchgreift, umfasst, sowie einen zweiten flexiblen Leitungsabschnitt (7-2), der sich vollständig oberhalb der Kontaktstelle (5b1) der flexiblen Leitung mit dem ersten Führungselement (5b), in einer kettenlinienförmigen Krümmung, von dem Führungselement (5b), das sie durchgreift, bis zu der Trommel (2), mit der ihr oberes Ende (7-2') verbunden ist, erstreckt.

2. Einrichtung nach Anspruch 1, **dadurch gekennzeichnet, dass** die Führungsstruktur (5) vorzugsweise wenigstens 4, weiterhin vorzugsweise 6 bis 12 erste Führungselemente (5b) umfasst, die am Umfang der Führungsstruktur verteilt, vorzugsweise symmetrisch und gleichmäßig, weiterhin vorzugsweise kreisförmig verteilt sind, und deren Achsen (Z₃Z₃') in einem Abstand (R1) von wenigstens 3 m, vorzugsweise von 3 bis 25 m von der Achse (Z₁Z₁') der Führungsstruktur entfernt gelegen sind.

3. Einrichtung nach Anspruch 1 oder 2, **dadurch gekennzeichnet, dass** die Führungsstruktur (5) wenigstens ein Auftriebselement (5c) umfasst, das geeignet ist, die Führungsstruktur oberhalb der Tragstruktur (4b, 4b1) der starren Leitungen in einer Tiefe (H) von wenigstens 25 m, vorzugsweise von 50 bis 250 m von der Oberfläche (10) zu halten.

4. Einrichtung nach einem der Ansprüche 1 bis 3, **dadurch gekennzeichnet, dass** das Auftriebselement (5c) durch wenigstens einen Kanister gebildet ist, dessen Spannkraft durch Ballastieren oder Ballastreduzieren des Kanisters variiert werden kann.

5. Einrichtung nach einem der Ansprüche 1 bis 4, **dadurch gekennzeichnet, dass** die Führungsstruktur (5) mit der Tragstruktur (4b) über eine Verbindung, die ein mechanisches, flexibles Gelenk (5a) zwischen der Führungsstruktur (5) und der Tragstruktur (4b, 4b1) bildet, verbunden ist.

6. Einrichtung nach einem der Ansprüche 1 bis 5, **dadurch gekennzeichnet, dass** die Führungsstruktur (5) wenigstens eine erste Stufe (P₁) von ersten Führungselementen (5b), die in einer Tiefe (H1) gelegen sind, sowie wenigstens eine zweite Stufe (P₂) von zweiten Führungselementen (5b') umfasst, die oberhalb der ersten Führungselemente in einer Tiefe (H2), welche geringer als die Tiefe (H1) der ersten Führungselemente (5b) ist, gelegen sind und durch die die zweiten flexiblen Leitungsabschnitte (7-2) hindurch laufen, wobei die Achse (Z₄Z₄') eines jeden zweiten Führungselements im Wesentlichen in einer gleichen vertikalen Ebene wie, aber in einem Abstand (R2) näher der Achse (Z₁Z₁') der Führungsstruktur als diejenige (Z₃Z₃') des ersten Führungselements positioniert ist, oberhalb dessen das zweite Führungselement gelegen ist und durch das eine gleiche flexible Leitung (7) hindurch läuft.

7. Einrichtung nach einem der Ansprüche 1 bis 6, **dadurch gekennzeichnet, dass** die Führungsstruktur durch wenigstens ein Verbindungs- und Spannseil (6) mit der Trommel (2) verbunden ist.

8. Einrichtung nach Anspruch 7, **dadurch gekennzeichnet, dass** das Spannseil (6) derart gespannt ist, dass der Winkel α zwischen der Achse (Z₂Z₂') des Spannseils und der Achse (Z₁Z₁`) der Tragstruktur, und vorzugsweise der Sehne (4b, 4b'), kleiner als 5° bleibt, wobei der schwimmende Träger am Meeresgrund derart verankert (1 b) ist, dass der Neigungswinkel β zwischen der Achse (Z₁Z₁`) der Tragstruktur und vorzugsweise der vertikalen Sehne (4b) und der durch den Sockel verlaufenden Vertikalen (Z₀Z₀') kleiner als 10° bleibt, wenn der schwimmende Träger durch die Unruhe des Meeres und/oder die Kraft des Windes trotz seiner Verankerung (1b) bewegt wird.

9. Einrichtung nach Anspruch 7 oder 8, **dadurch gekennzeichnet, dass** das Spannseil (6) die Trommel (2) vorzugsweise im Wesentlichen in der Achse (ZZ') der Trommel durchläuft, dann über Seilrollen (21, 24a-24b), die mit der Trommel und/oder der Struktur (1a, 1 c) des schwimmenden Trägers, vorzugsweise mit dem Deck (1a) des schwimmenden Trägers fest verbunden sind, gedreht wird, bevor es an seinem freien Ende durch ein Gegengewicht (23), das sich parallel zur Achse ZZ' der Trommel in einem Führungsschacht (25) innerhalb der Trommel (2) bzw. innerhalb des Rumpfes (1 c) des schwimmenden Trägers bewegt, gespannt wird.

10. Einrichtung nach Anspruch 7 oder 8, **dadurch gekennzeichnet, dass** das Seil (6) mit Hilfe eines Hydraulikspanners (30), welcher mit der Trommel (2) oder dem Deck (1a) des schwimmenden Trägers fest verbunden ist, gespannt wird, wobei der Hydraulikspanner (30) wenigstens einen mit einem Seilrollenflaschenzug (30b) zusammenwirkenden Hydraulikzylinder (30a) umfasst, wobei das Ende des Spannseils (6) mit einem mit dem Halter des Hydraulikzylinders (30a) fest verbundenen Festpunkt verbunden ist, und wobei ein Hydraulikaggregat (30c) bestehend aus Akkumulatoren und Pumpen geeignet ist, einen vorgegebenen, im Wesentlichen konstanten Druck in dem Zylinder aufrechtzuerhalten, der ermöglicht, eine vorgegebene, im Wesentlichen konstante Spannung in dem Spannseil (6) zu liefern.

11. Führungseinrichtung nach einem der Ansprüche 7 bis 10, **dadurch gekennzeichnet, dass** das Spannseil (6) auf der Strecke des Seils (6), vorzugsweise innerhalb der Trommel (2), mit einem Wirbel (6b) zusammenwirkt, derart, dass der untere Teil (6c) des Seils unterhalb des Wirbels (6b) torsionsfrei bleibt, wenn der obere Teil (6a) des Spannseils (6) den Relativdrehbewegungen (1) des schwimmenden Trägers gegenüber dem zylindrischen Innenteil der Trommel (2) folgt.

12. Einrichtung nach einem der Ansprüche 1 bis 11, **dadurch gekennzeichnet, dass** sie eine Festmachstruktur (2c) umfasst, die an der Unterseite der bodenseitigen Wand (2c1) des zylindrischen Innenteils (2a) der Trommel (2) vorzugsweise reversibel befestigt ist, wobei die flexiblen Leitungen (7) im Bereich ihrer oberen Enden (7-2') an der Festmachstruktur (2c) festgemacht sind, und wobei der schwimmende Träger (1) mittels Verankerungsleinen (1 b), die an der Festmachstruktur (2c) festgemacht sind, am Meeresgrund verankert ist, wobei vorzugsweise eine Vielzahl von zweiten Verbindungsleitungen (14), die zwischen den oberen Enden (7-2') der flexiblen Leitungen (7) und dem Deck (1a) des schwimmenden Trägers durch die Trommel (2) hindurch verlaufen, die bodenseitige Wand (2c1) des zylindrischen Innenteils (2a) der Trommel durchqueren und bis zu einem Anschluss (2b), vorzugsweise vom Typ Drehkupplung, an den die zweiten Verbindungsleitungen (14) angeschlossen sind, hinauf verlaufen, wobei der Anschluss (2b) mit dem schwimmenden Träger, vorzugsweise im Bereich des Decks (1a) des schwimmenden Trägers, fest verbunden ist.

13. Einrichtung nach einem der Ansprüche 1 bis 12, **dadurch gekennzeichnet, dass** sie einen Mehrfachriser-Hybridturm (4) aufweist, welcher umfasst:
a) eine vertikale Sehne (4b), die an wenigstens einem oberflächennah versenkten Auftriebskörpers (5b) aufgehängt ist, vorzugsweise mittels einer Kette oder eines Seils (5a), wobei die Sehne an ihrem unteren Ende an einem auf dem Meeresgrund aufliegenden und/oder am Meeresgrund (12) eingelassenen Sockel (8) befestigt ist, vorzugsweise mittels eines mechanischen, flexiblen Gelenks (8a), und
b) eine Vielzahl von als "Riser" bezeichneten starren, vertikalen Leitungen (4a), deren untere Enden über gekrümmte Verbindungsleitungselemente (5a, 4-2) und automatische Verbinder (9) mit der Vielzahl von auf dem Meeresgrund aufliegenden Leitungen (3) verbunden sind, und
c) eine Vielzahl von Auftriebs- und Führungsmodulen (4c, 4cᵢ mit i = 1 bis n), die durch die Sehne (4b) getragen ist, wobei die Auftriebs- und Führungsmodule Auftriebselemente, die die Riser in Position führen, vorzugsweise um die Sehne (4b) herum gleichmäßig und symmetrisch verteilt sind, tragen, wobei die Auftriebs- und Führungsmodule vorzugsweise eine Vielzahl unabhängiger Strukturen bilden, die entlang der Sehne (4b) und entlang der Riser (4a) verschieblich sind, wobei die Struktur (4c) Auftriebselemente, die die Riser in Position führen, vorzugsweise um die Sehne herum gleichmäßig und symmetrisch verteilt sind, trägt.

14. Verfahren zum Schleppen auf See eines Turms (4) und Anbringen einer Einrichtung nach Anspruch 13, **dadurch gekennzeichnet, dass** der Turm (4) die folgenden aufeinanderfolgenden Schritte umfasst, bei denen:
1) ein Turm (4) an Land vorgefertigt wird und
2) der Turm (4) auf See durch ein Verlegeschiff (11) in horizontaler Position auf See geschleppt wird, wobei der Turm (4) dank seiner entlang des Turms verteilten Auftriebselemente (4c) auf der Oberfläche (10) treibt, und
3) ein Ankerblock (13) am unteren Ende des Turms angebracht wird und
4) der Turm gekippt wird, dessen unteres Ende mit dem mechanischen flexiblen Gelenk (8a) im Bereich des Sockels (8) verbunden wird, und
5) die Führungsstruktur (5) von dem Verlegeschiff (11) aus herabgelassen wird und an der Spitze des Turms (4) angeschlossen wird, und
6) vorzugsweise ein Kanister (5c) für den Auftrieb der Führungsstruktur (5) um Ballast reduziert wird, anschließend das Seil zum Herablassen (11a) der Führungsstruktur abgetrennt wird, so dass die Führungsstruktur (5) durch ihren Eigenauftrieb (5c) dann in im Wesentlichen vertikaler Position oberhalb des Turms (4) bleibt, und
7) das Verlegeschiff (11) entfernt wird und der schwimmende Träger (1) an der Oberfläche bewegt wird, bis er in den Bereich der Führungsstruktur (5) gelangt, anschließend der schwimmende Träger mit Verankerungsleinen (1 b) am Meeresgrund verankert wird, und
8) vorzugsweise ein Verbindungs- und Spannseil (6) zwischen dem schwimmenden Träger (1) und der Führungsstruktur (5) angebracht wird und das Seil gespannt wird, um die Führungsstruktur (5) und den Turm (4), der mit ihr verbunden ist, ausreichend straff zu halten, um das nachfolgende Verlegen der flexiblen Leitungen (7) zu ermöglichen, und
9) das Verlegeschiff (11) genähert wird und jedes untere Ende (7-1') einer flexiblen Leitung (7) lotrecht und durch die Führungselemente (5b, 5b') hindurch herabgelassen wird, anschließend das Verbinden der unteren Enden (7-1) der flexiblen Leitungen (7) im Bereich der oberen Enden (4-1) der Riser (4a) vollzogen wird, dann
10) das Verbinden der unteren Enden der Riser (4a) mit den Enden der am Meeresgrund (12) aufliegenden Leitungen (3) vollzogen wird.

## Claims

1. A bottom-to-surface connection installation between a plurality of undersea pipes (3) resting on the sea bottom (12) and a floating support (1) at the surface (10) and anchored (1a) to the sea bottom, the installation comprising:
a) a said floating support including a turret (2) having a cavity (2d) within a structure offset at the front of the floating support or incorporated in or beneath the hull of the floating support, said cavity preferably passing through the hull of the floating support over its entire height, said turret (2) further including a cylindrical internal portion (2a) suitable for remaining substantially stationary relative to the sea bottom inside said cavity (2d) when said floating support (1) is caused to turn about the vertical axis (ZZ') of said internal portion (2a) or of said cavity (2d) of the turret, said floating support being anchored (1b) to the sea bottom via lines (1b) that are fastened at their top ends to said cylindrical internal portion (2a) of the turret (2); and
b) a plurality of flexible hoses (7, 7a-7b) extending from said turret to which their top ends (7-2') are connected to the top ends of respective ones of a plurality of rigid pipes (4a) to which the bottom ends (7-1') of said flexible hoses are connected, said rigid pipes (4a) providing connections between said flexible hoses (7, 7a, 7b) and respective ones of said plurality of undersea pipes (3) resting on the sea bottom, said rigid pipes (4a) being connected to one another and/or guided at least at their tops by a carrier structure (4b, 4b1) that is tensioned by buoyancy elements (4c, 5c), said carrier structure (4b, 4b1) being connected to a base unit (8) resting on or embedded in the sea bottom, the connection preferably being via a flexible mechanical hinge (8a), and said carrier structure preferably including a vertical tension leg (4b) extending to said flexible mechanical hinge (8a);
said installation being **characterized in that** it includes a guide structure (5) maintained in the subsurface (H) between said turret (2) and said carrier structure (4b, 4b1), preferably secured (5a) to said carrier structure (4b) at the top of said rigid pipes (4a), said guide structure (5) being suitable for guiding said flexible hoses (7) between their top ends (7-2') connected to said cylindrical internal portion (2a) of the turret (2) and their bottom ends (7-1') connected to the top ends of said rigid pipes (4a), preferably via swan-neck devices (4-1), said guide structure (5) having a plurality of first guide elements (5b) having respective ones of said plurality of flexible hoses passing respectively therethrough in such a manner that each said flexible hose has at least a first flexible hose portion (7-1) in a dipping catenary configuration with a low point of inflection (7', 7a', 7b') intermediate between the bottom end (7-1') of said flexible hoses connected to the top end of a said rigid pipe (4a) and the point of contact (5b1) between said flexible hose (7, 7a, 7b) and said first guide element (5b) through which it passes, and a second flexible hose portion (7-2) extending entirely above said point of contact (5b1) of said flexible hose with said first guide element (5b), following a catenary-shaped curve from said guide element (5b) through which it passes to said turret (2) to which its top end (7-2') is connected.

2. An installation according to claim 1, **characterized in that** said guide structure (5) preferably has at least four, more preferably six to twelve said first guide elements (5b) that are distributed, preferably symmetrically and regularly, more preferably circularly, at the periphery of said guide structure, having axes (Z₃Z₃') situated at a distance (R1) of at least 3 m, and preferably lying in the range 3 m to 25 m from the axis (Z₁Z₁') of said guide structure.

3. An installation according to claim 1 or claim 2, **characterized in that** said guide structure (5) includes at least one buoyancy element (5c) suitable for keeping said guide structure above said carrier structure (4b, 4b1) of the rigid pipes, at a depth (H) of at least 25 m, and preferably lying in the range 50 m to 250 m from the surface (10).

4. An installation according to any one of claims 1 to 3, **characterized in that** said buoyancy element (5c) is constituted by at least one drum for which it is possible to vary its tensioning force by ballasting or deballasting said drum.

5. An installation according to any one of claims 1 to 4, **characterized in that** said guide structure (5) is connected to said carrier structure (4b) by a connection constituting a flexible mechanical hinge (5a) between said guide structure (5) and said carrier structure (4b, 4b1).

6. An installation according to any one of claims 1 to 5, **characterized in that** said guide structure (5) includes at least one first stage (P₁) of said first guide elements (5b) situated at a depth (H1) and at least one second stage (P₂) of second guide elements (5b') situated above said first guide elements at a depth (H2) less than the depth (H1) of said first guide elements (5b), and through which said second flexible hose portions (7-2) pass, the axis (Z₄Z₄') of each said second guide element being positioned substantially in the same vertical plane as the axis (Z₃Z₃') of said first guide element above which said second guide element is situated and through which the same flexible hose (7) passes, but at a distance (R2) closer to the axis (Z₁Z₁') of said guide structure than said axis (Z₃Z₃') of said first guide element.

7. An installation according to any one of claims 1 to 6, **characterized in that** said guide structure is connected to said turret (2) by at least one connection and tensioning cable (6).

8. An installation according to claim 7, **characterized in that** said tensioning cable (6) is tensioned in such a manner that the angle α between the axis (Z₂Z₂') of said tensioning cable and the axis (Z₁Z₁') of said carrier structure, and preferably of said tension leg (4b, 4b'), remains less than 5°, said floating support being anchored (1b) to the sea bottom in such a manner that the angle of inclination β between the axis (Z₁Z₁') of said carrier structure, and preferably of said vertical tension leg (4b), and the vertical (Z₀Z₀') passing through said base unit remains less than 10° when the floating support is moved by rough water and/or wind force in spite of being anchored (1b).

9. An installation according to claim 7 or claim 8, **characterized in that** said tensioning cable (6) passes through said turret (2) preferably substantially on the axis (ZZ') of said turret, and is then bent over pulleys (21, 24a-24b) secured to said turret and/or to the structure (1a, 1c) of the floating support, preferably the deck (1a) of the floating support, prior to being tensioned at its free end by a counterweight (23) moving parallel to the axis ZZ' of said turret in a guide wall (25) inside said turret (2) or respectively inside the hull (1c) of said floating support.

10. An installation according to claim 7 or claim 8, **characterized in that** said cable (6) is tensioned using a hydraulic tensioner (30) secured to the turret (2) or to the deck (1a) of the floating support, said hydraulic tensioner (30) including at least one hydraulic actuator (30a) co-operating with a reeving of pulleys (30b), the end of said tensioning cable (6) being fastened to a stationary point secured to the support of said hydraulic actuator (30a), and a hydraulic unit (30c) constituted by accumulators and pumps suitable for maintaining a substantially constant given pressure in said actuator enabling a substantially constant given tension to be imparted to said tensioning cable (6).

11. A guide installation according to any one of claims 7 to 10, **characterized in that** said tensioning cable (6) co-operates with a swivel connection (6b) on the path of the cable (6), preferably inside the turret (2), in such a manner that the bottom portion (6c) of the cable beneath said swivel connection (6b) remains without twisting, while the top portion (6a) of said tensioning cable (6) follows the relative turning movements (1) of said floating support about said internal cylindrical portion of the turret (2).

12. An installation according to any one of claims 1 to 11, **characterized in that** it includes a mooring structure (2c) fastened, preferably in reversible manner, to the underface of the bottom wall (2c1) of said internal cylindrical portion (2a) of the turret (2), said flexible hoses (7) being moored to said mooring structure (2c) at their said top ends (7-2') and said floating support (1) being anchored to the sea bottom by anchor lines (1b) moored to said mooring structure (2c), preferably a plurality of second connection pipes (14) extending through said turret (2) between the top ends (7-2') of said flexible hoses (7) and the deck (1a) of the floating support, passing through the bottom wall (2c1) of the internal cylindrical portion (2a) of the turret and rising to a coupling (2b), preferably of the swivel joint type, having said second connection pipes (14) connected thereto, said coupling (2b) being secured to the floating support, preferably via the deck (1a) of the floating support.

13. An installation according to any one of claims 1 to 12, **characterized in that** it include a multi-riser hybrid tower (4) comprising:
a) a vertical tension leg (4b) suspended from at least one float (5b) immersed in the subsurface, preferably via a chain or cable (5a), said tension leg being fastened at its bottom end, preferably via a flexible mechanical hinge (8a), to a base unit (8) resting on the sea bottom and/or embedded in the sea bottom (12); and
b) a plurality of rigid vertical pipes (4a) referred to as "risers", having their bottom ends connected via junction bend pipe elements (5a, 4-2) and automatic connectors (9) to a plurality of said pipes (3) resting on the sea bottom; and
c) a plurality of buoyancy and guide modules (4c, 4cᵢ for i = 1 to n) supported by said tension leg (4b), said buoyancy and guide modules supporting buoyancy elements and guiding said risers in position, preferably in a regularly and symmetrically distributed arrangement around said tension leg (4b), said buoyancy and guide modules preferably constituting a plurality of independent structures suitable for sliding along said tension leg (4b) and along said risers (4a), said structure (4c) supporting buoyancy elements and guiding said risers in position, preferably in a regular and symmetrical distribution around said tension leg.

14. A method of towing a tower (4) at sea and putting into place an installation according to claim 13, the method being **characterized in that** it comprises the following successive steps:
1) prefabricating a said tower (4) on land; and
2) towing said tower (4) at sea while in the horizontal position and using a laying ship (11), said tower (4) floating at the surface (10) because of said buoyancy elements (4c) distributed along said tower; and
3) installing a deadman (13) at the bottom end of said tower; and
4) up-ending said tower and connecting its bottom end to said flexible mechanical hinge (8a) at said base unit (8); and
5) lowering said guide structure (5) from the laying ship (11) and connecting it (5a) to the top of said tower (4); and
6) preferably deballasting a buoyancy drum (5c) of said guide structure (5) and then disconnecting the cable (11a) for lowering said guide structure, such that said guide structure (5) then remains as a result of its own buoyancy (5c) in a position substantially vertically above said tower (4); and
7) moving away the laying ship (11) and moving the floating support (1) on the surface until it comes up to said guide structure (5), and then anchoring the floating support to the sea bottom using anchor lines (1b); and
8) preferably installing a connection and tensioning cable (6) between the floating support (1) and the guide structure (5), and tensioning said cable to maintain said guide structure (5) and said tower that is connected thereto in a configuration that is sufficiently stiff to enable said flexible hoses (7) to be subsequently put into place; and
9) bringing up the laying ship (11) and lowering each bottom end (7-1') of a flexible hose (7) in register with and through a respective one of said guide elements (5b, 5b'), and then connecting the bottom ends (7-1) of the flexible hoses (7) to the top ends (4-1) of corresponding ones of said risers (4a); and then
10) connecting the bottom ends of the risers (4a) with the ends of the pipes (3) resting on the sea bottom (12) .
